# EUROPEAN PATENT APPLICATION

(11) **EP 4 836 497 A1**
(43) Date of publication of application: **04.11.2026**
(21) Application number: 25748973.2
(22) Date of filing: 23.01.2025
(51) Int. Cl.: H04W 24/02, H04W 76/12, H04W 92/16

(54) **METHOD AND DEVICE FOR OPERATING DEVICE IN WIRELESS COMMUNICATION SYSTEM**

(30) Priority: 31.01.2024 KR 20240015144
(71) Applicant: Samsung Electronics Co., Ltd., Suwon-si, Gyeonggi-do 16677 (KR)
(72) Inventor: JE, Donghyun, Suwon-si Gyeonggi-do 16677 (KR); KIM, Dongmyung, Suwon-si Gyeonggi-do 16677 (KR)
(74) Representative: Nederlandsch Octrooibureau
(86) International application number: PCT/KR2025/001295
(87) International publication number: WO 2025/165069

(57) **Abstract**

The present disclosure relates to a 5G or 6G communication system for supporting a data transmission rate higher than that of a 4G system such as LTE. A method performed by a central unit-user plane (CU-UP) of a base station in a wireless communication system, according to an embodiment of the present disclosure, may comprise the steps of: identifying whether a device connected to the CU-UP of the base station so as to assist an operation function of the CU-UP of the base station is present; and, if a device connected to the CU-UP of the base station is present, transmitting, to the central unit-user plane (CU-UP) of the base station, a first message including first information indicating the presence of the device and second information related to the performance of the device.

## Description

### [Technical Field]

The disclosure relates to a method for configuration in a control plane for utilization of a device capable of assisting a computational function on a central unit-user plane (CU-UP) side of a base station in a wireless communication system.

### [Background Art]

Considering the development of wireless communication from generation to generation, the technologies have been developed mainly for services targeting humans, such as voice calls, multimedia services, and data services. Following the commercialization of 5G (5th-generation) communication systems, it is expected that the number of connected devices will exponentially grow. Increasingly, these will be connected to communication networks. Examples of connected things may include vehicles, robots, drones, home appliances, displays, smart sensors connected to various infrastructures, construction machines, and factory equipment. Mobile devices are expected to evolve in various form-factors, such as augmented reality glasses, virtual reality headsets, and hologram devices. In order to provide various services by connecting hundreds of billions of devices and things in the 6G (6th-generation) era, there have been ongoing efforts to develop improved 6G communication systems. For these reasons, 6G communication systems are referred to as beyond-5G systems.

6G communication systems, which are expected to be commercialized around 2030, will have a peak data rate of tera (1,000 giga)-level bps and a radio latency less than 100µsec, and thus will be 50 times as fast as 5G communication systems and have the 1/10 radio latency thereof.

In order to accomplish such a high data rate and an ultra-low latency, it has been considered to implement 6G communication systems in a terahertz band (for example, 95GHz to 3THz bands). It is expected that, due to severer path loss and atmospheric absorption in the terahertz bands than those in mmWave bands introduced in 5G, technologies capable of securing the signal transmission distance (that is, coverage) will become more crucial. It is necessary to develop, as major technologies for securing the coverage, radio frequency (RF) elements, antennas, novel waveforms having a better coverage than orthogonal frequency division multiplexing (OFDM), beamforming and massive multiple input multiple output (MIMO), full dimensional MIMO (FD-MIMO), array antennas, and multiantenna transmission technologies such as large-scale antennas. In addition, there has been ongoing discussion on new technologies for improving the coverage of terahertz-band signals, such as metamaterial-based lenses and antennas, orbital angular momentum (OAM), and reconfigurable intelligent surface (RIS).

Moreover, in order to improve the spectral efficiency and the overall network performances, the following technologies have been developed for 6G communication systems: a full-duplex technology for enabling an uplink transmission and a downlink transmission to simultaneously use the same frequency resource at the same time; a network technology for utilizing satellites, high-altitude platform stations (HAPS), and the like in an integrated manner; an improved network structure for supporting mobile base stations and the like and enabling network operation optimization and automation and the like; a dynamic spectrum sharing technology via collision avoidance based on a prediction of spectrum usage; an use of artificial intelligence (AI) in wireless communication for improvement of overall network operation by utilizing AI from a designing phase for developing 6G and internalizing end-to-end AI support functions; and a next-generation distributed computing technology for overcoming the limit of UE computing ability through reachable super-high-performance communication and computing resources (such as mobile edge computing (MEC), clouds, and the like) over the network. In addition, through designing new protocols to be used in 6G communication systems, developing mechanisms for implementing a hardware-based security environment and safe use of data, and developing technologies for maintaining privacy, attempts to strengthen the connectivity between devices, optimize the network, promote softwarization of network entities, and increase the openness of wireless communications are continuing.

It is expected that research and development of 6G communication systems in hyper-connectivity, including person to machine (P2M) as well as machine to machine (M2M), will allow the next hyper-connected experience. Particularly, it is expected that services such as truly immersive extended reality (XR), high-fidelity mobile hologram, and digital replica could be provided through 6G communication systems. In addition, services such as remote surgery for security and reliability enhancement, industrial automation, and emergency response will be provided through the 6G communication system such that the technologies could be applied in various fields such as industry, medical care, automobiles, and home appliances.

Meanwhile, a need has emerged for configuration in a control plane for utilization of a device capable of assisting a computational function on a central unit-user plane (CU-UP) side of a base station in a wireless communication system.

### [Detailed Description of the Invention]

### [Technical Problem]

The disclosure proposes a method for enabling configuration in a control plane for utilization of a device capable of assisting a computational function on a central unit-user plane (CU-UP) side of a base station in a wireless communication system.

### [Technical Solution]

According to an embodiment, a method performed by a central unit-user plane (CU-UP) of a base station in a wireless communication system, the method comprising: identifying whether there exists a device that is connected to the CU-UP of the base station and is capable of assisting a computational function of the CU-UP of the base station; and if the device connected to the CU-UP of the base station exists, transmitting, to a central unit-control plane (CU-CP) of the base station, a first message including first information indicating presence of the device and second information regarding capability of the device.

According to an embodiment, a method performed by a central unit-control plane (CU-CP) of a base station in a wireless communication system, the method comprising: receiving, from the CU-UP of the base station, a first message including first information indicating presence of a device that is connected to a central unit-user plane (CU-UP) of the base station and is capable of assisting a computational function of the CU-UP of the base station and second information regarding capability of the device; and identifying, based on the first message, the device connected to the CU-UP of the base station.

According to an embodiment, a base station including a central unit-user plane (CU-UP) in a wireless communication system, the base station comprising: a transceiver; and at least one processor, wherein the at least one processor is configured to identify whether there exists a device that is connected to the CU-UP of the base station and is capable of assisting a computational function, and if the device connected to the CU-UP of the base station exists, control to transmit, to a central unit-control plane (CU-CP) of the base station, a request message for setting up an E1 interface to deliver information indicating presence of the device and information regarding capability of the device.

According to an embodiment, a base station including a central unit-control plane (CU-CP) of a base station in a wireless communication system, the base station comprising: a transceiver; and at least one processor, wherein the at least one processor is configured to control to transmit, to the CU-UP of the base station, a request message for setting up an E1 interface to connect the CU-UP of the base station and the CU-CP of the base station, in order to identify information indicating presence of a device that is connected to a central unit-user plane (CU-UP) of the base station and is capable of assisting a computational function of the CU-UP of the base station and information regarding capability of the device.

### [Advantageous Effects]

A method and an apparatus according to an embodiment of the disclosure may enable E1 interface setup and update for utilization of a device capable of assisting a computational function on a central unit-user plane (CU-UP) side of a base station in a wireless communication system.

A method and an apparatus according to an embodiment of the disclosure may enable bearer context setup and update for utilization of a device capable of assisting a computational function on a central unit-user plane (CU-UP) side of a base station in a wireless communication system.

A method and an apparatus according to an embodiment of the disclosure may enable low-latency and high-speed packet processing by utilizing a device capable of assisting a computational function on a central unit-user plane (CU-UP) side of a base station in a wireless communication system.

A method and an apparatus according to an embodiment of the disclosure may enable context configuration including security information per central unit-user plane (CU-UP) of a base station in order to enhance security of the base station in a wireless communication system.

A method and an apparatus according to an embodiment of the disclosure may enable context update including security information for utilization of a device capable of assisting a computational function on a central unit-user plane (CU-UP) side of a base station in a wireless communication system.

### [Brief Description of Drawings]

FIG. 1 is a view illustrating a structure of a wireless communication system according to an embodiment of the present invention.
FIG. 2 is a view illustrating a radio protocol structure in an LTE system according to an embodiment of the present invention.
FIG. 3 is a view illustrating a radio protocol structure of a next-generation mobile communication system according to an embodiment of the present invention.
FIG. 4 illustrates data packet processing of a next-generation mobile communication system according to an embodiment of the present invention.
FIG. 5 is a view illustrating virtualized data packet processing in a CU-UP of a base station according to an embodiment of the present invention.
FIG. 6 is a view illustrating an example of a CU-CP of a base station and a CU-UP of a base station according to an embodiment of the present invention.
FIG. 7 is a view illustrating that a CU-CP of a base station communicates with a plurality of CU-UPs through an E1 interface according to an embodiment of the present invention.
FIG. 8 is a view illustrating that a CU-CP of a base station communicates information about presence and capability of a device capable of assisting a computational function from a plurality of CU-UPs through an E1 interface according to an embodiment of the present invention.
FIG. 9 is a view illustrating an overall operation according to an embodiment of the present invention.
FIG. 10 is a view illustrating general data packet processing in a CU-UP of a base station and a data packet processing operation when a device capable of assisting a computational function is mounted, according to an embodiment of the present invention.
FIG. 11 is a view illustrating an operation of setting up an E1 interface to deliver information about a device capable of assisting a computational function between a CU-CP of a base station and a CU-UP of a base station according to an embodiment of the present invention.
FIG. 12 is a view illustrating an operation for updating, when there is a change in information about a device capable of assisting a computational function between a CU-CP of a base station and a CU-UP of a base station, the change according to an embodiment of the present invention.
FIG. 13 is a view illustrating an operation when delivery of information about a device capable of assisting a computational function between a CU-CP of a base station and a CU-UP of a base station fails according to an embodiment of the present invention.
FIG. 14 is a view illustrating, in case of failure to update a change in information about a device capable of assisting a computational function between a CU-CP of a base station and a CU-UP of a base station, the failure according to an embodiment of the present invention.
FIG. 15 is a view illustrating bearer setup between a CU-CP of a base station and a CU-UP of a base station according to an embodiment of the present invention.
FIG. 16 is a view illustrating, when a CU-CP of a base station requests modification of a bearer context from a CU-UP of a base station, the request according to an embodiment of the present invention.
FIG. 17 is a view illustrating, when a CU-UP of a base station requests modification of a bearer context from a CU-CP of a base station, the request according to an embodiment of the present invention.
FIG. 18 is a view illustrating, when there is content regarding security information at the time of a request for modification of a bearer context from a CU-CP of a base station to a CU-UP of a base station, the content according to an embodiment of the present invention.
FIG. 19 is a block diagram illustrating a base station including a CU-CP according to embodiments of the present invention.
FIG. 20 is a block diagram illustrating a base station including a CU-UP according to embodiments of the present invention.

### [Mode for Carrying out the Invention]

Hereinafter, preferred embodiments of the disclosure are described in detail with reference to the accompanying drawings. In this case, it should be noted that the same components in the accompanying drawings are denoted by the same reference numerals as much as possible. Further, a detailed description of known functions and configurations which may obscure the subject matter of the disclosure will be omitted.

In describing the embodiments in the disclosure, descriptions of technical contents that are well known in the technical field to which the disclosure pertains and are not directly related to the disclosure are omitted. This is to more clearly convey the gist of the disclosure without obscuring it by omitting unnecessary descriptions.

For the same reason, in the accompanying drawings, some components are exaggerated, omitted, or schematically illustrated. Further, the size of each component does not entirely reflect the actual size. In each drawing, the same or corresponding components are given the same reference numerals.

The advantages and features of the disclosure and methods for achieving them become apparent with reference to the embodiments described below in detail together with the accompanying drawings. However, the disclosure is not limited to the embodiments disclosed below, but may be implemented in various different forms, and these embodiments are provided only to make the disclosure complete and to fully inform those skilled in the art to which the disclosure pertains of the scope of the disclosure, and the disclosure is only defined by the scope of the claims. Throughout the specification, the same reference numerals refer to the same components.

In this case, it is understood that each block of the processing flowchart diagrams and combinations of flowchart diagrams may be performed by computer program instructions. Since these computer program instructions may be loaded on a processor of a general-purpose computer, special-purpose computer, or other programmable data processing equipment, the instructions executed through the processor of the computer or other programmable data processing equipment produce means for performing the functions described in the flowchart block(s). Since these computer program instructions may also be stored in a computer-usable or computer-readable memory that may direct a computer or other programmable data processing equipment to implement a function in a particular manner, the instructions stored in the computer-usable or computer-readable memory may also produce an article of manufacture containing instruction means for performing the functions described in the flowchart block(s). Since the computer program instructions may also be loaded on a computer or other programmable data processing equipment, a series of operational steps may be performed on the computer or other programmable data processing equipment to generate a computer-implemented process such that the instructions executing the computer or other programmable data processing equipment may also provide steps for executing the functions described in the flowchart block(s).

Further, each block may represent a module, segment, or portion of code that includes one or more executable instructions for performing specified logical function(s). Further, it should be noted that in some alternative implementations, the functions noted in the blocks may occur out of order. For example, two blocks illustrated in succession may in fact be performed substantially simultaneously, or the blocks may sometimes be performed in reverse order according to the corresponding function.

In this case, the term "unit" used in the present embodiment refers to a software component or a hardware component such as a field programmable gate array (FPGA), or an application specific integrated circuit (ASIC), and a "unit" performs predetermined roles. However, the term "unit" is not limited to software or hardware. A "unit" may be configured to reside in an addressable storage medium or may be configured to reproduce one or more processors. Thus, as an example, a "unit" includes components such as software components, object-oriented software components, class components, and task components, as well as processes, functions, attributes, procedures, subroutines, segments of program code, drivers, firmware, microcode, circuits, data, databases, data structures, tables, arrays, and variables. The functionality provided within components and "units" may be combined into a smaller number of components and "units" or may be further separated into additional components and "units." Further, components and "units" may be implemented to reproduce one or more CPUs within a device or a secure multimedia card.

In embodiments of the disclosure, a base station is an entity that performs resource allocation of a terminal, and may be at least one of a gNode B, a gNB, an eNode B, an eNB, a Node B, a BS, a wireless access unit, a base station controller, or a node on a network. Further, the base station may be a network entity including at least one of an Integrated Access and Backhaul-donor (IAB-donor), which is a gNB providing network access to a terminal(s) through a network of backhaul and access links in an NR system, and an IAB-node, which is a radio access network (RAN) node supporting NR access link(s) to a terminal(s) and supporting NR backhaul links to the IAB-donor or another IAB-node. A terminal may be wirelessly connected through an IAB-node and may transmit/receive data to/from an IAB-donor connected with at least one IAB-node through a backhaul link.

Further, the terminal may include a user equipment (UE), a mobile station (MS), a cellular phone, a smartphone, a computer, or various devices capable of performing communication functions. In the disclosure, downlink (DL) refers to a radio transmission path of a signal transmitted from a base station to a terminal, and uplink (UL) refers to a radio transmission path of a signal transmitted from a terminal to a base station. Further, although an LTE or LTE-A system may be described below as an example, embodiments of the disclosure may also be applied to other communication systems having similar technical backgrounds or channel forms. For example, the 5th generation mobile communication technology (5G, new radio, NR) or 6G developed after LTE-A may be included therein, and 5G or 6G below may be a concept including the existing LTE, LTE-A, and other similar services. Further, the disclosure may be applied to other communication systems through some modifications within a range that does not significantly depart from the scope of the disclosure as determined by a person having ordinary skill in the art.

Terms referring to signals, terms referring to channels, terms referring to control information, terms referring to network entities, terms referring to components of an apparatus, and the like used in the following description are exemplified for convenience of description. Further, terms for identifying a node, terms referring to messages, terms referring to interfaces between network entities, terms referring to various pieces of information, and the like used in the following description are exemplified for convenience of description. Accordingly, the disclosure is not limited to the terms described below, and other terms having equivalent technical meanings may be used.

Further, although the disclosure describes various embodiments using terms used in some communication standards (e.g., 3rd Generation Partnership Project (3GPP)), these are merely examples for description. Various embodiments of the disclosure may be readily modified and applied to other communication systems as well.

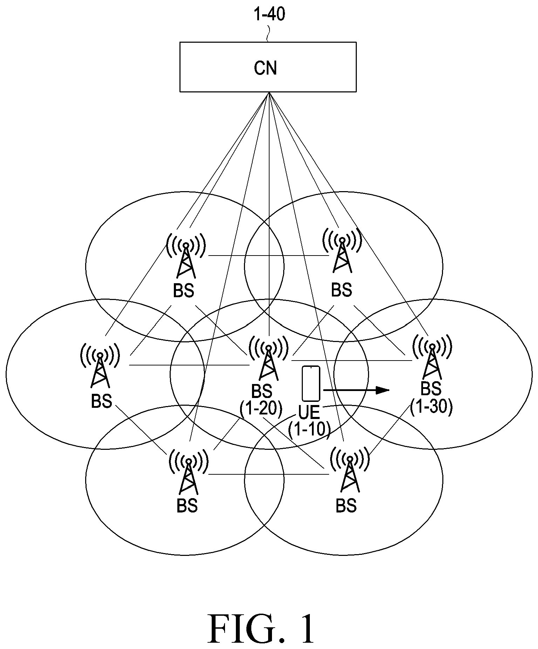

FIG. 1 is a view illustrating a structure of a wireless communication system according to an embodiment of the present invention.

FIG. 1 illustrates an example in which a plurality of base stations and a user equipment (UE) in a mobile communication system to which embodiments of the present invention are applied move and change the base station to which they are connected.

Base stations 1-20, 1-30 may be connected with some neighboring base stations, and the base stations 1-20, 1-30 may be connected with a mobile communication core network (CN) 1-40 such as an Evolved Packet Core (EPC), a 5G Core Network (5GC), or a 6G network.

A radio access technology of the base stations 1-20, 1-30 may be LTE, NR, Wi-Fi, 6G, and the like, and is not limited to an example. For example, the base stations 1-20, 1-30 may be mobile communication base stations independent of the radio access technology.

A terminal 1-10 may be connected to a base station and provided with a mobile communication service, and as the terminal 1-10 moves, the base station to which it is connected may be changed, and through a handover (HO; or handoff) procedure, the terminal 1-10 may be provided with a mobile communication service seamlessly. In the example of FIG. 1, the terminal 1-10 may be connected to the base station 1-20, and through handover, may disconnect from the base station 1-20 and connect to a new base station 1-30.

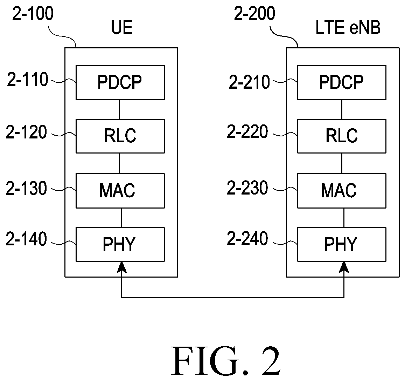

FIG. 2 is a view illustrating a radio protocol structure in an LTE system according to an embodiment of the present invention.

Referring to FIG. 2, the radio protocol of the LTE system includes packet data convergence protocol (PDCP) 2-110, 2-210, radio link control (RLC) 2-120, 2-220, and medium access control (MAC) 2-130, 2-230 in a terminal 2-100 and a base station 2-200, respectively. The components of the radio protocol may be referred to as layers, entities, or devices.

Packet data convergence protocol (PDCP) 2-110, 2-210 is responsible for operations such as IP header compression/decompression. The main functions of PDCP are summarized as follows.
- Header compression and decompression: ROHC only
- Transfer of user data
- In-sequence delivery of upper layer PDUs at PDCP re-establishment procedure for RLC AM
- For split bearers in DC (only support for RLC AM): PDCP PDU routing for transmission and PDCP PDU reordering for reception
- Duplicate detection of lower layer service data units (SDUs) at PDCP re-establishment procedure for RLC AM
- Retransmission of PDCP SDUs at handover and, for split bearers in DC, of PDCP PDUs at PDCP data-recovery procedure, for RLC AM
- Ciphering and deciphering
- Timer-based SDU discard in uplink

The Radio Link Control (hereinafter referred to as RLC) 2-120, 2-220 reconfigures PDCP packet data units (PDUs) into appropriate sizes and performs ARQ operations. The main functions of RLC are summarized as follows.
- Transfer of upper layer PDUs
- Error Correction through ARQ (only for AM data transfer)
- Concatenation, segmentation and reassembly of RLC SDUs (only for UM and AM data transfer)
- Re-segmentation of RLC data PDUs (only for AM data transfer)
- Reordering of RLC data PDUs (only for UM and AM data transfer)
- Duplicate detection (only for UM and AM data transfer)
- Protocol error detection (only for AM data transfer)
- RLC SDU discard (only for UM and AM data transfer)
- RLC re-establishment

MAC 2-130, 2-230 is connected with multiple RLC layer devices configured in one terminal, and performs the operation of multiplexing RLC PDUs into a MAC PDU and demultiplexing RLC PDUs from a MAC PDU. The main functions of MAC are summarized as follows.
- Mapping between logical channels and transport channels
- Multiplexing/demultiplexing of MAC SDUs belonging to one or different logical channels into/from transport blocks (TB) delivered to/from the physical layer on transport channels
- Scheduling information reporting
- Error correction through HARQ
- Priority handling between logical channels of one UE
- Priority handling between UEs by means of dynamic scheduling
- MBMS service identification
- Transport format selection
- Padding

The physical layer 2-140, 2-240 performs operations of channel-coding and modulating upper layer data, generating OFDM symbols and transmitting them through a radio channel, or demodulating OFDM symbols received through a radio channel, performing channel decoding, and delivering the result to an upper layer.

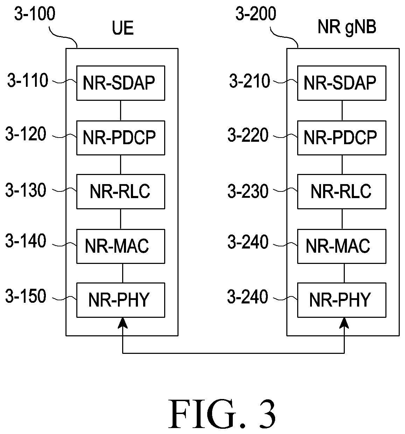

FIG. 3 is a view illustrating a radio protocol structure of a next-generation mobile communication system according to an embodiment of the present invention.

Referring to FIG. 3, the radio protocol of the next-generation mobile communication system includes NR SDAP (service data application protocol) 3-110, 3-210, NR PDCP 3-120, 3-220, NR RLC 3-130, 3-230, and NR MAC 3-140, 3-240 in a terminal 3-100 and an NR base station 3-200, respectively. The components of the radio protocol may be referred to as layers, entities, or devices.

The main functions of NR SDAP 3-110, 3-210 may include some of the following functions.
- transfer of user plane data
- mapping between a QoS flow and a DRB for both DL and UL
- marking QoS flow ID in both DL and UL packets
- reflective QoS flow to DRB mapping for the UL SDAP PDUs

For the SDAP layer device, the terminal may be configured by a radio resource control (RRC) message, per PDCP layer device, per bearer, or per logical channel, as to whether to use the header of the SDAP layer device or whether to use the functions of the SDAP layer device, and if the SDAP header is configured, the terminal may be instructed by a 1-bit indicator for NAS QoS reflective configuration (NAS reflective QoS) and a 1-bit indicator for AS QoS reflective configuration (AS reflective QoS) of the SDAP header so that the terminal may update or reconfigure mapping information between QoS flow and data bearer of uplink and downlink. The SDAP header may include QoS flow ID information indicating QoS. The QoS information may be used as data processing priority, scheduling information, and the like for supporting a smooth service.

The main functions of NR PDCP 3-120, 3-220 may include some of the following functions.
- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

In the above, the reordering function of the NR PDCP device refers to a function of reordering PDCP PDUs received from a lower layer in order based on PDCP SN (sequence number), and may include a function of delivering data to the upper layer in the reordered order, or a function of immediately delivering data without considering the order, may include a function of reordering and recording lost PDCP PDUs, may include a function of performing a status report on the lost PDCP PDUs to the transmitting side, and may include a function of requesting retransmission of the lost PDCP PDUs.

The main functions of NR RLC 3-130, 3-230 may include some of the following functions.
- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

In the above, the in-sequence delivery function of the NR RLC device refers to a function of delivering RLC SDUs received from a lower layer to an upper layer in order, and may include a function of, when one original RLC SDU is received as divided into multiple RLC SDUs, reassembling and delivering them, may include a function of reordering the received RLC PDUs based on RLC SN (sequence number) or PDCP SN (sequence number), may include a function of reordering and recording lost RLC PDUs, may include a function of performing a status report on the lost RLC PDUs to the transmitting side, may include a function of requesting retransmission of the lost RLC PDUs, may include a function of, if there is a lost RLC SDU, delivering only RLC SDUs prior to the lost RLC SDU in order to the upper layer, or may include a function of, even if there is a lost RLC SDU, if a predetermined timer has expired, delivering all RLC SDUs received before the timer was started in order to the upper layer, or may include a function of, even if there is a lost RLC SDU, if a predetermined timer has expired, delivering all RLC SDUs received so far in order to the upper layer.

Further, in the above, the RLC PDUs may also be processed in the order in which they are received (regardless of the order of sequence number SN, in the order of arrival) and delivered to the PDCP device regardless of order (out-of-sequence delivery), and if a received RLC PDU is a segment, segments stored in a buffer or segments to be received later may be received and reconstructed into one complete RLC PDU, which may then be processed and delivered to the PDCP device. The NR RLC layer may not include a concatenation function, and the function may be performed in the NR MAC layer or replaced by a multiplexing function of the NR MAC layer.

In the above, the out-of-sequence delivery function of the NR RLC device refers to a function of delivering RLC SDUs received from a lower layer directly to the upper layer regardless of order, and may include a function of, when one original RLC SDU is received as divided into multiple RLC SDUs, reassembling and delivering them, and may include a function of storing the RLC SN or PDCP SN of the received RLC PDUs and reordering them to record lost RLC PDUs.

NR MAC 3-140, 3-240 may be connected with multiple NR RLC layer devices configured in one terminal, and the main functions of NR MAC may include some of the following functions.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

The NR PHY layer 3-150, 3-250 may perform operations of channel-coding and modulating upper layer data, generating OFDM symbols and transmitting them through a radio channel, or demodulating OFDM symbols received through a radio channel, performing channel decoding, and delivering the result to an upper layer.

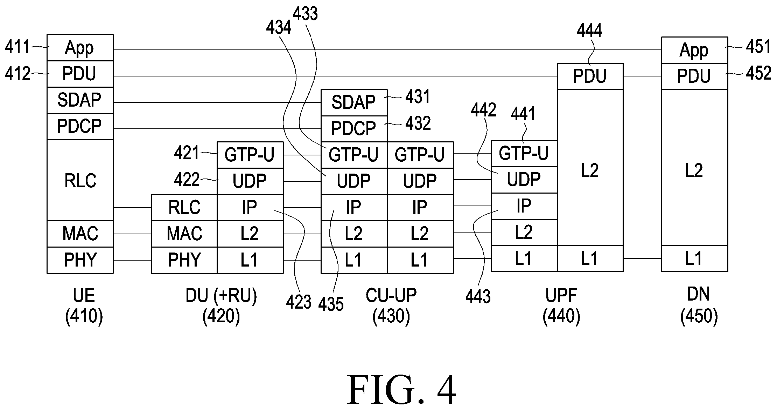

FIG. 4 is a view illustrating a data packet processing structure of a next-generation mobile communication system according to an embodiment of the present invention.

Referring to FIG. 4, the mobile communication system may include a User Equipment (UE) 410, a DU (+RU) (Distributed Unit + Radio Unit) 420, a CU-UP (Central Unit-User Plane) 430, a User Plane Function (UPF) 440, and a Data Network (DN) 450.

The mobile communication system includes the data network (DN) 450 and the terminal (UE) 410, and may provide communication services (e.g., telephone and/or data services) to the terminal 410 even while moving. In 5G, a control plane (CP) and a user plane (UP) are distinguished. In the control plane, a link with the terminal may be established and the data service function may be controlled. In the user plane, communication and data services may be provided to the terminal with high quality. For data services, there is the UPF 440 corresponding to the core network, and the CU-UP (Central Unit-User Plane) 430 and the DU (Distributed Unit) 420 corresponding to the base station exist. In 5G, a function of subdividing the functions of the base station and processing the functions by dividing them into CU-UP and DU may be provided.

In the mobile communication system, the terminal 410 may include a PHY layer (e.g., 3-150 of FIG. 3), a MAC layer (e.g., 3-140 of FIG. 3), an RLC layer (e.g., 3-130 of FIG. 3), a PDCP layer (e.g., 3-120 of FIG. 3), an SDAP layer (e.g., 3-110 of FIG. 3), a PDU layer (Packet Data Unit layer) 412, and an App layer (Application layer) 411.

The DU 420, the CU-UP 430, and the UPF 440 each may include GTP-U (GPRS Tunneling Protocol-User plane) 433, 441, UDP (User Datagram Protocol) 422, 434, 442, and IP (Internet Protocol) 435, 443 layers.

The App layer 411, 451 is an application layer that may perform a role of converting a client's request into data that the server can understand and delivering it to the transport layer in order to deliver the request. Further, the App layer 411, 451 may use the protocol of the application layer in order for a client-side application to communicate with a server-side application.

The PDU layer 412, 444, 452 may process data packets delivered between the terminal (UE) 410 and the DN 450 through a PDU session (Packet Data Unit Session). For example, when the PDU session type is IPv4 (Internet Protocol version 4), IPv6 (Internet Protocol version 6), or IPv4v6 (Internet Protocol version 4 or 6), the PDU layer 412, 444, 452 may process an IPv4 packet, an IPv6 packet, or both through the PDU session. When the PDU session type is Ethernet, the PDU layer 412, 444, 452 may process an Ethernet frame.

The GTP-U 433, 441 may refer to a protocol that supports user data tunneling through N3 (between a 5G-AN node and the UPF) and N9 (between different UPFs of 5GC) in a backbone network.

The UDP 422, 434, 442 may support a method of transmitting data without going through a connection procedure when exchanging data. The IP 422, 434, 443 is an Internet Protocol address and may serve to identify a device connected to the Internet.

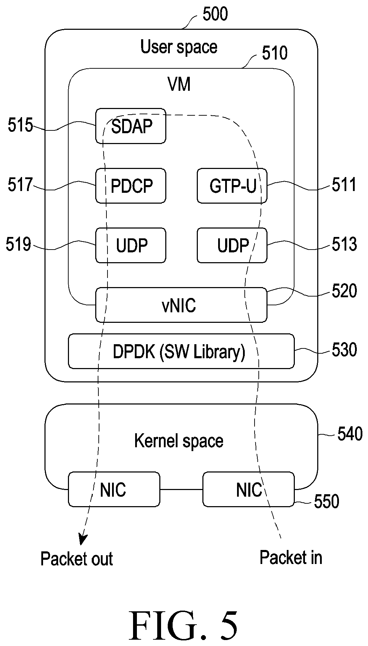

FIG. 5 is a view illustrating virtualized data packet processing in a CU-UP of a base station according to an embodiment of the present invention.

In 5G, a function of subdividing the functions of the base station and processing the base station functions by splitting them into CU-UP and DU may be provided. Operators may offload base software (SW) on a virtualized platform in 5G in order to reduce base station installation and operation costs, and provide mobile communication services.

FIG. 5 illustrates, for convenience of description, an embodiment in which the CU-UP of the base station is virtualized and implemented as a Virtual Machine (VM) 510. FIG. 5 shows a packet flow in the virtualized base station CU-UP when the terminal downloads data. However, the technical idea of the present invention may be applied identically or substantially identically not only to an embodiment in which the base station (or the CU-UP of the base station) is virtualized but also to an embodiment in which the base station (or the CU-UP of the base station) is not virtualized.

Referring to FIG. 5, when a data packet packet-ins into the CU-UP, the data packet may be input to a User Space 500 through a NIC (Network Interface Controller) 550 and a Kernel Space 540. The data packet may pass through a vNIC (virtual Network Interface Controller) 520 in the NIC driver set of the DPDK (Data Plane Development Kit) 530, and through UDP 513, GTP-U 511, SDAP (Service Data Association Protocol) 515, PDCP (Packet Data Convergence Protocol) 517, and UDP 519 in the VM (Virtual Machine) 510. The data packet may packet-out through the vNIC 520, the DPDK 530, the kernel space 540, and the NIC 550.

The NIC 550 may refer to a hardware device used to connect a computer to a network and communicate. It may provide an address assignment system using MAC addresses and enable physical access as a network medium.

The vNIC 520 may refer to a virtual network interface based on the physical NIC of the host.

The kernel space 540 is a space where a kernel exists. The kernel may provide basic services for all other parts of the system to manage the physical and abstract resources of the computer, manage hardware, and distribute system resources.

When the SDAP 515 receives an IP packet and needs to attach an SDAP header, the SDAP 515 inserts a QoS flow ID or other necessary information into the SDAP header by applying the mapping information between the IP flow and the QoS flow preset in the network. Thereafter, the SDAP header may be attached in front of the IP packet and delivered to a bearer or PDCP layer suitable for QoS.

The PDCP 517 is one of the layers of the radio traffic stack in Universal Mobile Telecommunication System (UMTS), and may perform IP header compression and decompression, user data transfer, and sequence number maintenance for the Radio Bearer.

The DPDK 530 is high-performance packet processing software that provides libraries and drivers for high-speed packet processing and may improve the network performance of NFV (Network Function Virtualization).

In the data packet processing process, the CU provides support for the upper layers of the protocol stack such as SDAP and PDCP. In this case, the PDCP performs security processing. Meanwhile, the DU may provide support for the lower layers of the protocol stack such as the RLC, MAC, and PHY layers.

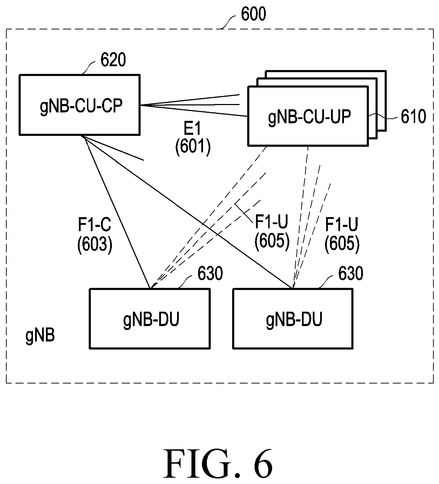

FIG. 6 is a view illustrating an example of a CU-CP of a base station and a CU-UP of a base station according to an embodiment of the present invention.

Mobile communication operators may provide more services in increasingly smaller service areas. Such a small service area may be characterized as a small cell. However, communicating while moving in and out of such small service areas has issues such as capacity, coverage, and interference, all of which should be addressed. Accordingly, servicing the small cells through centralized radio access networks (C-RAN) has been proposed. One of the requirements for implementing C-RAN is a new concept called fronthaul.

A 5G system may functionally separate a base station (gNB) 600 into a gNB-CU (gNodeB-central unit) 610, 620 and a gNB-DU (gNodeB-distributed unit) 630. Further, additionally, in order to implement the concept of cloud RAN, separation of the CU into a gNB-CU-CP (gNodeB-central unit-control plane) 620 and a gNB-CU-UP (gNodeB-central unit-user plane) 610 has been introduced.

In this deployment scenario, RAN protocol functions are distributed across different locations such as the gNB-CU 610, 620 and the gNB-DU 630. The gNB-DU may host the RLC, MAC, and physical layers. The gNB-CU-CP 620 may host the RRC and PDCP-C protocols. The gNB-CU-UP 610 may host the PDCP-U (and SDAP) protocol. The gNB-DU 630 and the gNB-CU-CP 620 may be connected through an F1-C interface 603. The gNB-DU 630 and the CU-UP 610 may be connected through an F1-U interface 605. The gNB-CU-CP 620 and the gNB-CU-UP 610 may be connected through an E1 interface 601.

According to the separated deployment scenario, the locations of different RAN functions may be optimally deployed based on the scenario and the desired performance. For example, the gNB-CU-CP 620 may be deployed at a location close to the gNB-DU 630. Alternatively, the gNB-CU-CP 620 may be co-located with the gNB-DU 630. In such a case, short latency may be provided for important CP procedures such as connection (re-)establishment, handover, and state transition. On the other hand, the gNB-CU-UP 610 may be centrally deployed in a regional or national data center. Accordingly, the gNB-CU-UP 610 is advantageous for cloud implementation, and may provide a centralized end point of UP traffic in dual connectivity and tight interworking scenarios. Further, additional gNB-CU-UPs 610 may be deployed close to (or co-located with) the gNB-DU 630 to provide a local end point of UP traffic for applications requiring very low latency (e.g., ultra-reliable low latency communications (URLLC) traffic).

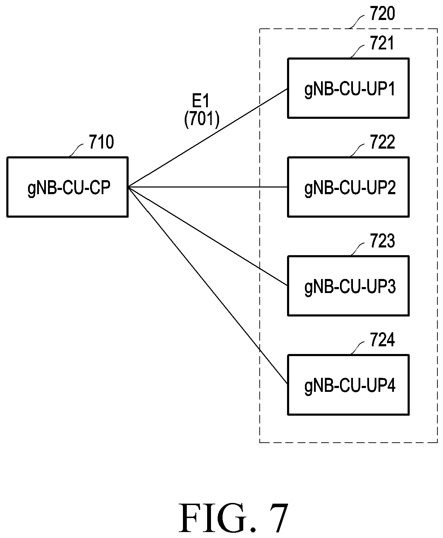

FIG. 7 is a view illustrating that a CU-CP of a base station communicates with a plurality of CU-UPs through an E1 interface according to an embodiment of the present invention.

Referring to FIG. 7, a CU-CP 710 of a base station may communicate with a plurality of CU-UPs 720 through an E1 interface 701. The plurality of CU-UPs 720 may include a first CU-UP 721, a second CU-UP 722, a third CU-UP 723, and a fourth CU-UP 721. The plurality of CU-UPs 721, 722, 723, 724 may have different capabilities or different functions, respectively. In such a structure, the CU-CP may communicate with CU-UPs of various capabilities and functions.

Although FIG. 7 illustrates, for convenience of description, that the plurality of CU-UPs 720 includes four CU-UPs 720, the technical idea of the present invention is not limited thereto, and the plurality of CU-UPs 720 may include various numbers of CU-UPs 720.

In FIG. 7, the CU-CP cannot perform high-speed low-latency packet processing utilizing the device because there is no presence of a device capable of assisting the computational function on the CU-UP side.

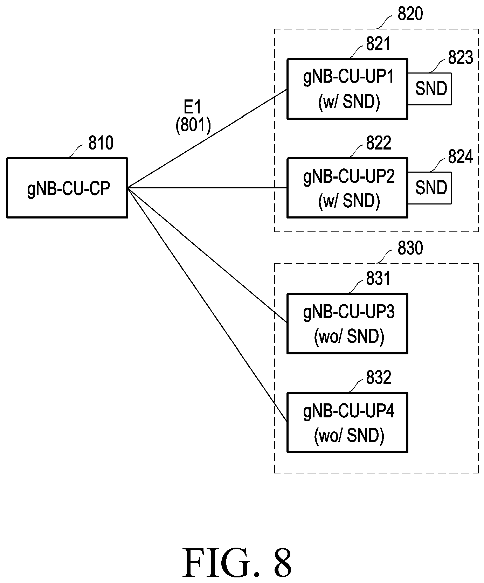

FIG. 8 is a view illustrating that a CU-CP of a base station communicates information about presence and capability of a device capable of assisting a computational function from a plurality of CU-UPs through an E1 interface according to an embodiment of the present invention.

Referring to FIG. 8, a CU-CP 810 of a base station may communicate with a plurality of CU-UPs 821, 822, 831, 832 through an E1 interface 801.

Although FIG. 8 illustrates, for convenience of description, that the plurality of CU-UPs 820, 830 includes four CU-UPs, the technical idea of the present invention is not limited thereto, and the plurality of CU-UPs 820, 830 may include various numbers of CU-UPs. Further, the Smart Network Device (SND) described in FIG. 8 is an example of a device capable of assisting a computational function.

Among the plurality of CU-UPs, there may be CU-UPs 820 in which devices 823, 824 capable of assisting a computational function exist, and CU-UPs 830 in which they do not exist. Since the devices 823, 824 have different capabilities, in order for the CU-CP 810 to perform high-speed low-latency packet processing by utilizing the device, the CU-CP 810 should be able to know the presence and capability of the device of the CU-UPs 821, 822. The disclosure proposes a method of delivering the presence or absence and the capability of the device.

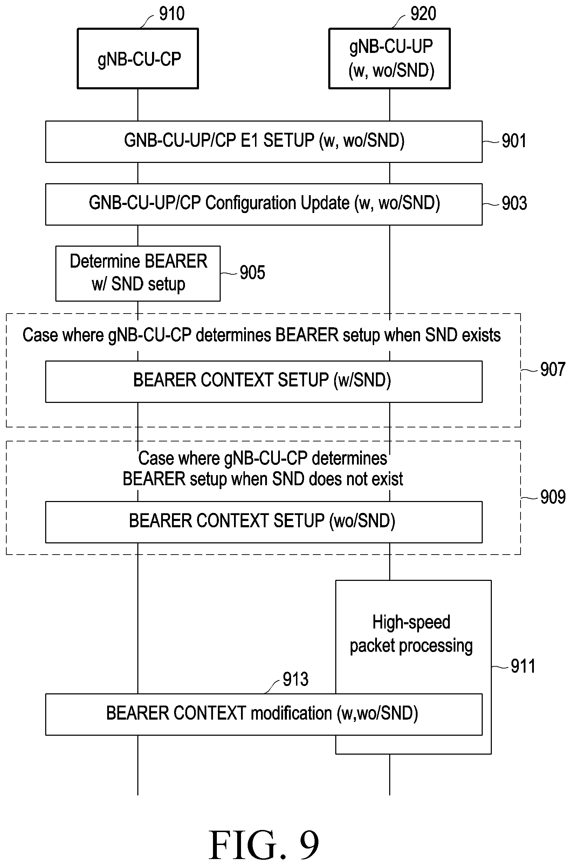

FIG. 9 is a view illustrating an overall operation according to an embodiment of the present invention.

Referring to FIG. 9, an overall flowchart of the present invention occurring between a CU-CP 910 of a base station and a CU-UP 920 of a base station is disclosed. The Smart Network Device (SND) described in FIG. 9 is an example of a device capable of assisting a computational function.

In operation 901, the CU-UP 920 may transmit, to the CU-CP 910, a request message for E1 interface setup to identify the presence and capability of a device capable of assisting a computational function.

In response to the request message for E1 interface setup of the CU-UP 920, the CU-CP 910 may transmit a corresponding response message to the CU-UP 920.

The CU-CP 910 may transmit a request message for E1 interface setup to the CU-UP 920.

In response to the message for E1 interface setup of the CU-CP 910, the CU-UP 920 may transmit a response message for identifying the presence and capability of the device capable of assisting the computational function.

In operation 903, when the presence and capability of the device capable of assisting the computational function have changed, the CU-UP 920 may transmit, to the CU-CP 910, a request message for updating the change.

In response to the request message for the update of the CU-UP 920, the CU-CP 910 may transmit a corresponding response message.

When the presence and capability of the device capable of assisting the computational function have changed, the CU-CP 910 may transmit, to the CU-UP 920, a request message for updating the change.

In response to the request message for the update of the CU-CP 910, the CU-UP 920 may transmit a corresponding response message.

In operation 905, when the CU-UP 920 has a device capable of assisting a computational function, the CU-CP 910 may make a decision to set up a bearer.

In operation 907, when a device capable of assisting a computational function exists on the CU-UP 920 side, the CU-CP 910 may determine whether to set up a bearer context.

In operation 909, when a device capable of assisting a computational function does not exist on the CU-UP 920 side, the CU-CP 910 may determine whether to set up a bearer context.

In operation 911, the CU-UP 920 may identify whether high-speed packet processing is required.

In operation 913, when a change is required for the high-speed packet processing, the CU-UP 920 may transmit a request message for bearer context modification to the CU-CP 910.

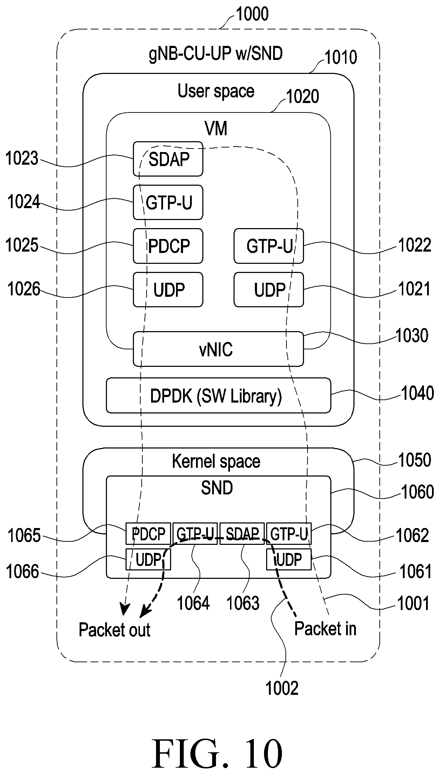

FIG. 10 is a view illustrating general data packet processing in a CU-UP of a base station and a data packet processing operation when a computational assistance device is mounted, according to an embodiment of the present invention.

FIG. 10 illustrates, for convenience of description, an embodiment in which the CU-UP (gNB-CU-CP) of the base station is virtualized and implemented as a Virtual Machine (VM) 1010. FIG. 10 shows a packet flow in the virtualized base station CU-UP when the terminal downloads data. However, the technical idea of the present invention may be applied identically or substantially identically not only to an embodiment in which the base station (or the CU-UP of the base station) is virtualized but also to an embodiment in which the base station (or the CU-UP of the base station) is not virtualized.

Referring to FIG. 10, when a device capable of assisting a computational function exists in the CU-UP of the base station 1000, the path of the data packet (packet in/out) may appear variously depending on the computational function performed by the device. For convenience of description, two examples 1001, 1002 of the path of the data packet (packet in/out) may be illustrated in FIG. 10. Further, the Smart Network Device described in FIG. 10 is an example of a device capable of assisting a computational function.

According to an embodiment, when packet-in 1001 to the DPDK 1040 is performed, it operates similarly to the packet-in scenario in FIG. 5, which operates when bearer setup is not performed because there is no device capable of assisting a computational function on the CU-UP side. In this case, the data packet passes through the kernel space 1050, the User Space 1010, and the vNIC 1030 in the NIC set of the DPDK 1040. The data packet passes through the UDP 1021, the GTP-U 1022, the SDAP 1023, the PDCP 1025, and the UDP 1026 in the VM 1020, and packet-outs to the vNIC 1030, the DPDK 1040, and the kernel space 1050.

According to an embodiment, when a device 1060 capable of assisting a computational function exists on the CU-UP side and bearer setup is performed, packet-in 1002 may be performed to the device 1060 capable of assisting a computational function. In this case, the data packet packet-ins 1002 to the device 1060 capable of assisting a computational function, passes through the UDP 1061, the GTP-U 1062, the SDAP 1063, the GTP-U 1064, the PDCP 1065, and the UDP 1066, and packet-outs.

According to an embodiment, the device 1060 capable of assisting a computational function may have at least one of the following characteristics.
- A special hardware device that performs network-related tasks
- A device that allows users to program network applications using high-level languages such as P4
- A device that performs data packet pipeline design optimization and independent protocols
- A device with an FPGA-based approach for prototyping the device
- A device that allows users to develop designs that can process data packets at line speed

According to an embodiment, the device 1060 capable of assisting a computational function may have the following advantages.
- It may offload a subset of the network tasks of the host VNF (Virtual Network Function, e.g., UPF).
- It enables acceleration of network tasks without CPU intervention.
- It enables programming independent of specific protocols and/or vendors.
- The latency is reduced by 2-20 times, and it enables higher throughput than CPU processing.

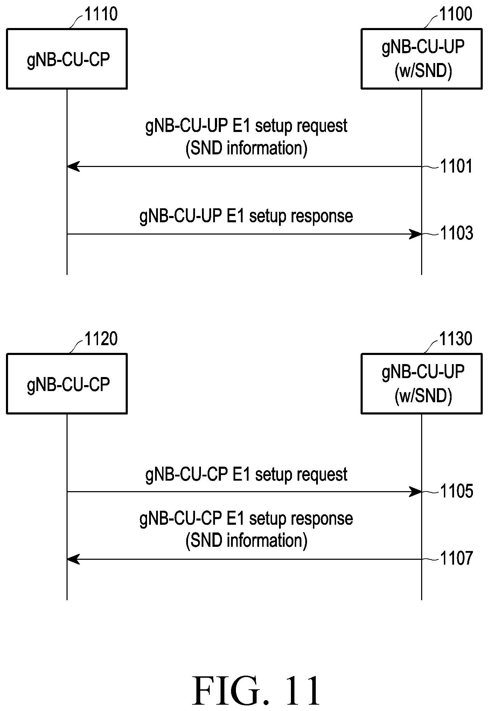

FIG. 11 is a view illustrating an operation of setting up an E1 interface to deliver information about a computational assistance device between a CU-CP of a base station and a CU-UP of a base station according to an embodiment of the present invention. The Smart Network Device (SND) described in FIG. 11 is an example of a device capable of assisting a computational function.

In operation 1101, the CU-UP 1100 of the base station identifies whether there exists a device that is connected to the CU-UP 1100 of the base station and is capable of assisting a computational function of the CU-UP 1100 of the base station, and if the device connected to the CU-UP 1100 of the base station exists, may transmit, to the CU-CP 1110 of the base station, an E1 interface setup request message including information indicating presence of the device and information regarding capability of the device.

In operation 1103, when the CU-UP 1100 of the base station transmits the request message according to the operation 1101, the CU-UP 1100 of the base station may receive, from the CU-CP 1110, the E1 interface setup response message according to the request message.

In operation 1105, the CU-CP 1120 of the base station may transmit an E1 interface setup request message to the CU-UP 1130 of the base station to identify the presence or absence of a device capable of assisting a computational function on the CU-UP 1130 side of the base station and information regarding capability of the device.

In operation 1107, when the CU-CP 1120 of the base station transmits the request message according to the operation 1105, the CU-CP 1120 of the base station may receive, from the CU-UP 1130, the E1 interface setup response message according to the request message. The response message may include information regarding capability of the device.

In operations 1101, 1103, 1105, and 1107, the message regarding the presence and capability of the device capable of assisting a computational function may be configured as in [Table 1].

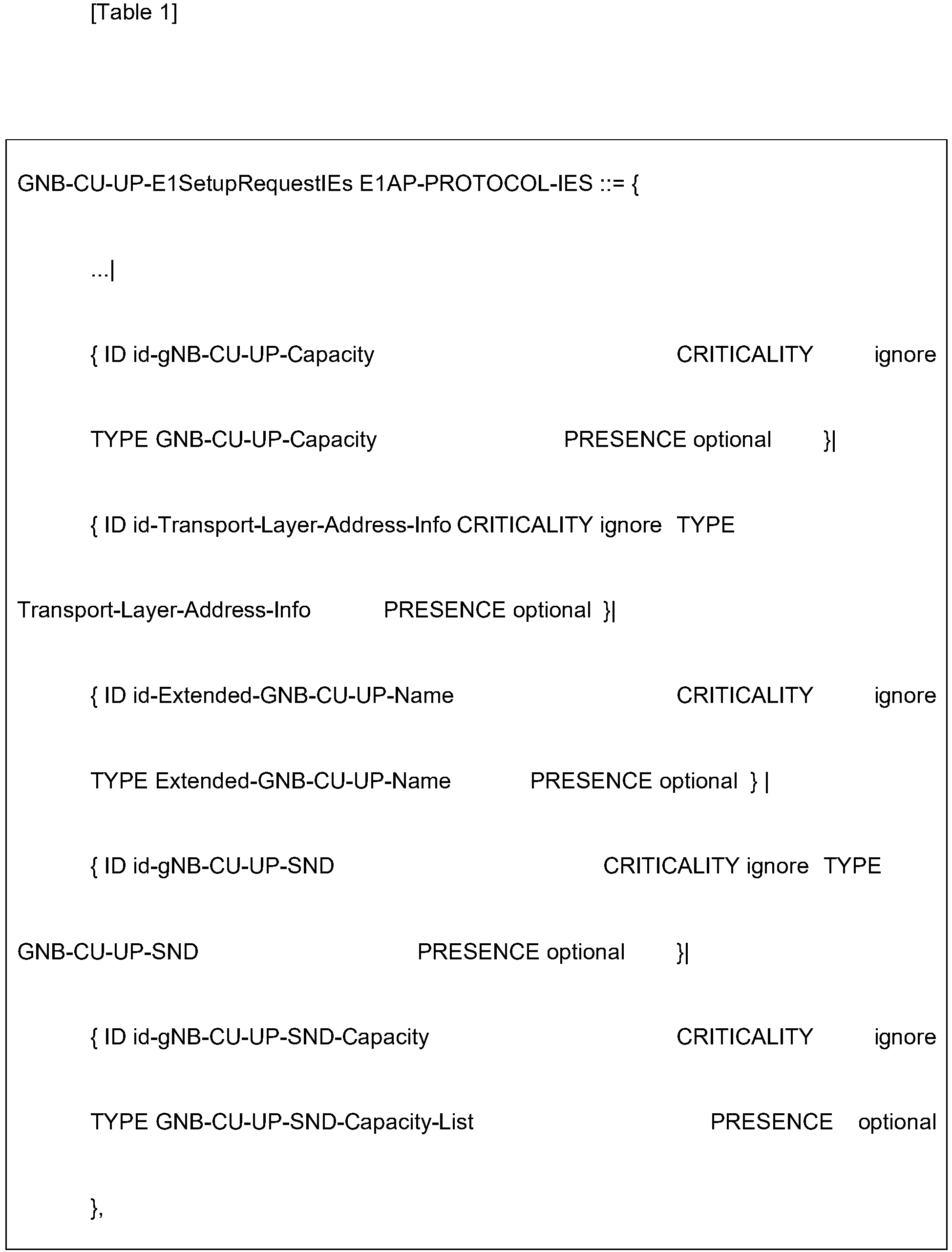

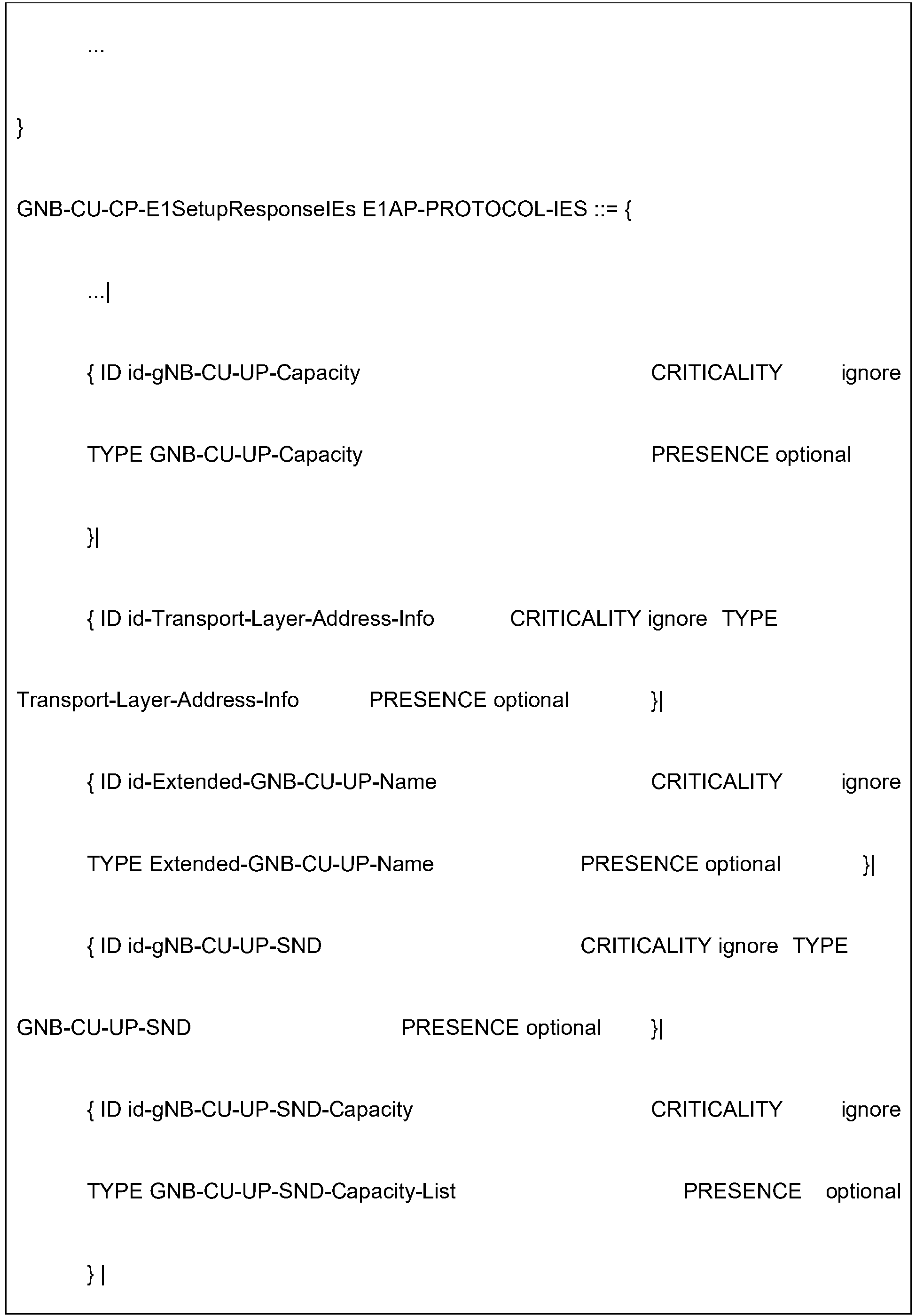

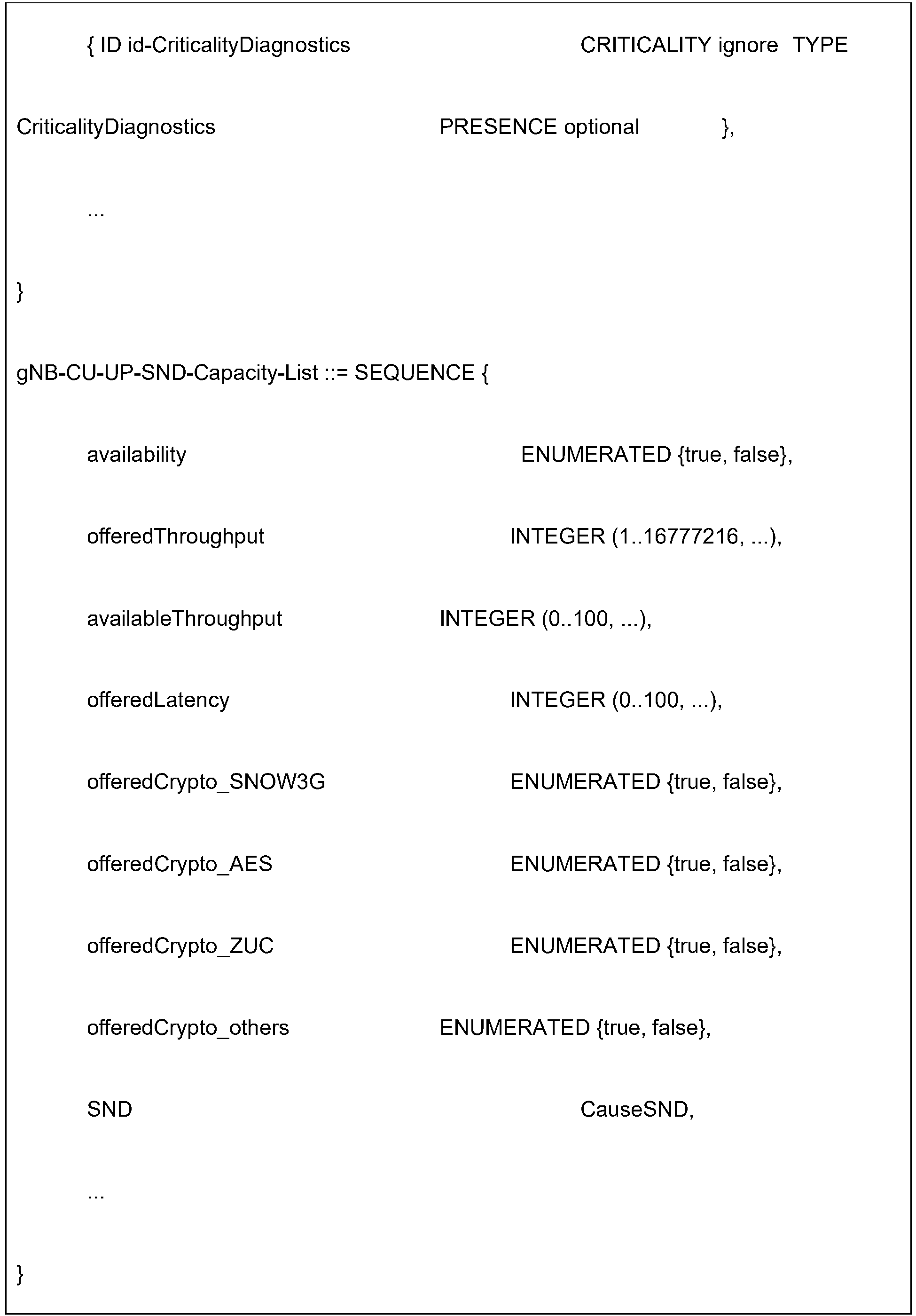

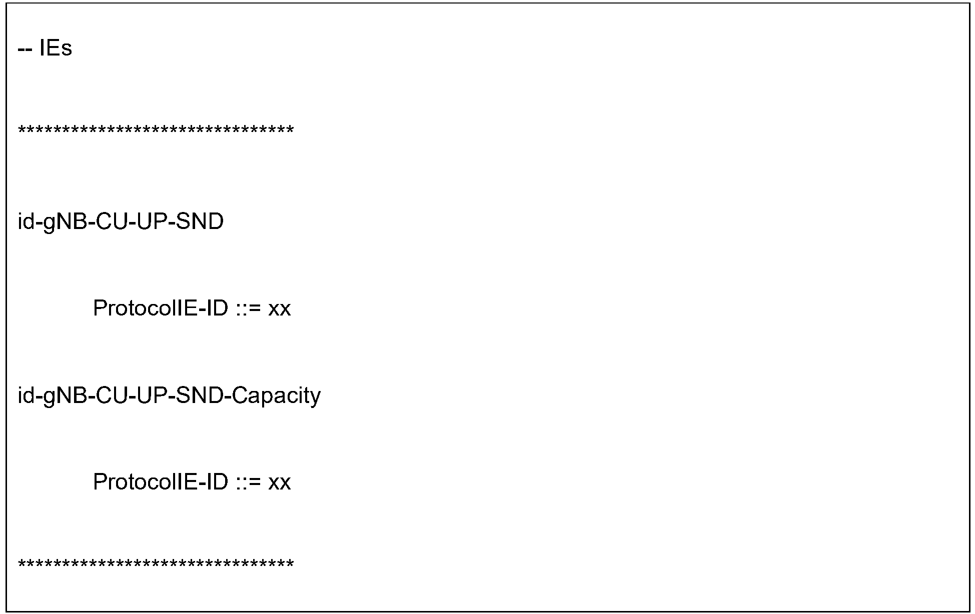

According to an embodiment, in a method performed by a central unit-user plane (CU-UP) 1100 of a base station in a wireless communication system, it is identified whether there exists a device that is connected to the CU-UP 1100 of the base station and is capable of assisting a computational function of the CU-UP 1100 of the base station, and if the device connected to the CU-UP 1100 of the base station exists, a first message including first information indicating presence of the device and second information regarding capability of the device may be transmitted to the central unit-control plane (CU-CP) 1110 of the base station.

According to an embodiment, when there is a step in which the CU-UP 1100 of the base station transmits, to the CU-CP 1110 of the base station, a first message including the first information indicating presence of the device and the second information regarding capability of the device, the method further comprises receiving, from the CU-CP 1110 of the base station, a second message corresponding to the first message, wherein if the first message is a request message 1101 for setting up an E1 interface for connecting the CU-UP 1100 of the base station and the CU-CP 1110 of the base station, the second message is a setup response message 1103 for the E1 interface, and if the second message is a request message 1105 for setting up the E1 interface for connecting the CU-UP 1130 of the base station and the CU-CP 1120 of the base station, the first message may be a setup response message 1107 for the E1 interface.

According to an embodiment, the information regarding the capability of the device capable of assisting a computational function may include at least one of information on whether the device is used, throughput provided by the device, throughput available to the device, latency related to the device, and information regarding an encryption algorithm used in the device.

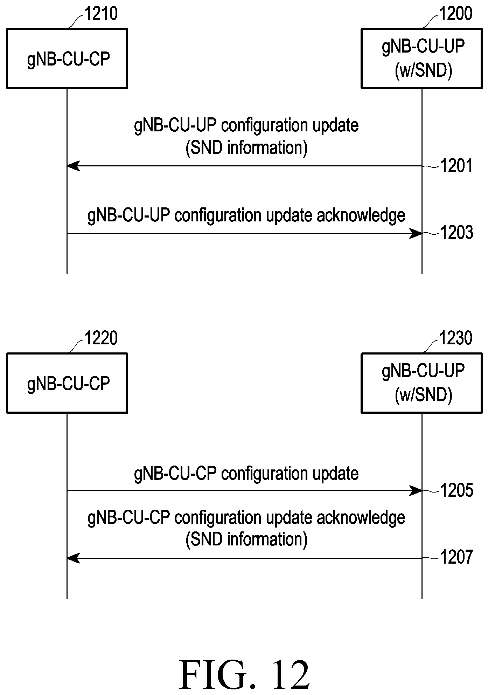

FIG. 12 is a view illustrating an operation for updating, when there is a change in information about a device capable of assisting a computational function between a CU-CP of a base station and a CU-UP of a base station, the change according to an embodiment of the present invention. The Smart Network Device (SND) described in FIG. 12 is an example of a device capable of assisting a computational function.

In operation 1201, it is identified whether there is a capability change of a device that is connected to the CU-UP 1200 of the base station and is capable of assisting a computational function of the CU-UP 1200 of the base station, and if there is a capability change of the device, the CU-UP 1200 of the base station may transmit, to the CU-CP 1210 of the base station, an update request message for the capability change of the device.

In operation 1203, when the CU-UP 1200 of the base station transmits the request message according to the operation 1201, the CU-UP 1200 of the base station may receive, from the CU-CP 1210, an update response message according to the request message.

In operation 1205, the CU-CP 1220 of the base station may transmit, to the CU-UP 1230 of the base station, an update request message to identify whether there is a capability change of a device capable of assisting a computational function on the CU-UP 1230 side of the base station.

In operation 1207, when the CU-CP 1220 of the base station transmits the request message according to the operation 1205, the CU-CP 1220 of the base station may receive, from the CU-UP 1230, an update response message according to the request message. The response message may include information regarding the capability change of the device.

In operations 1201, 1203, 1205, and 1207, the message regarding the update of the device capable of assisting a computational function may be configured as in [Table 2].

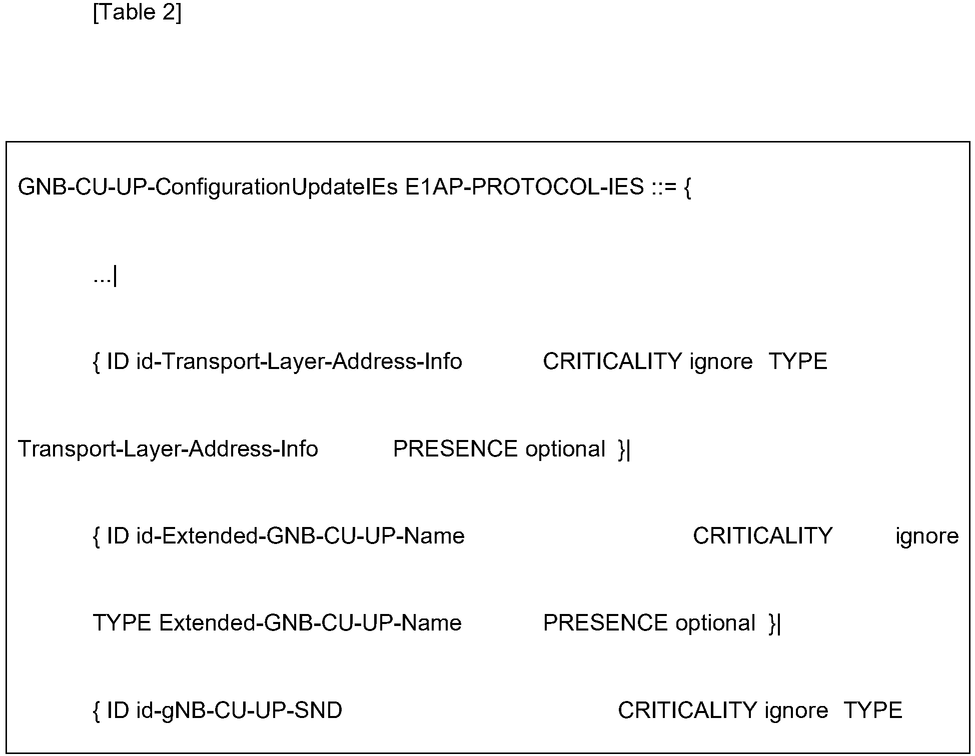

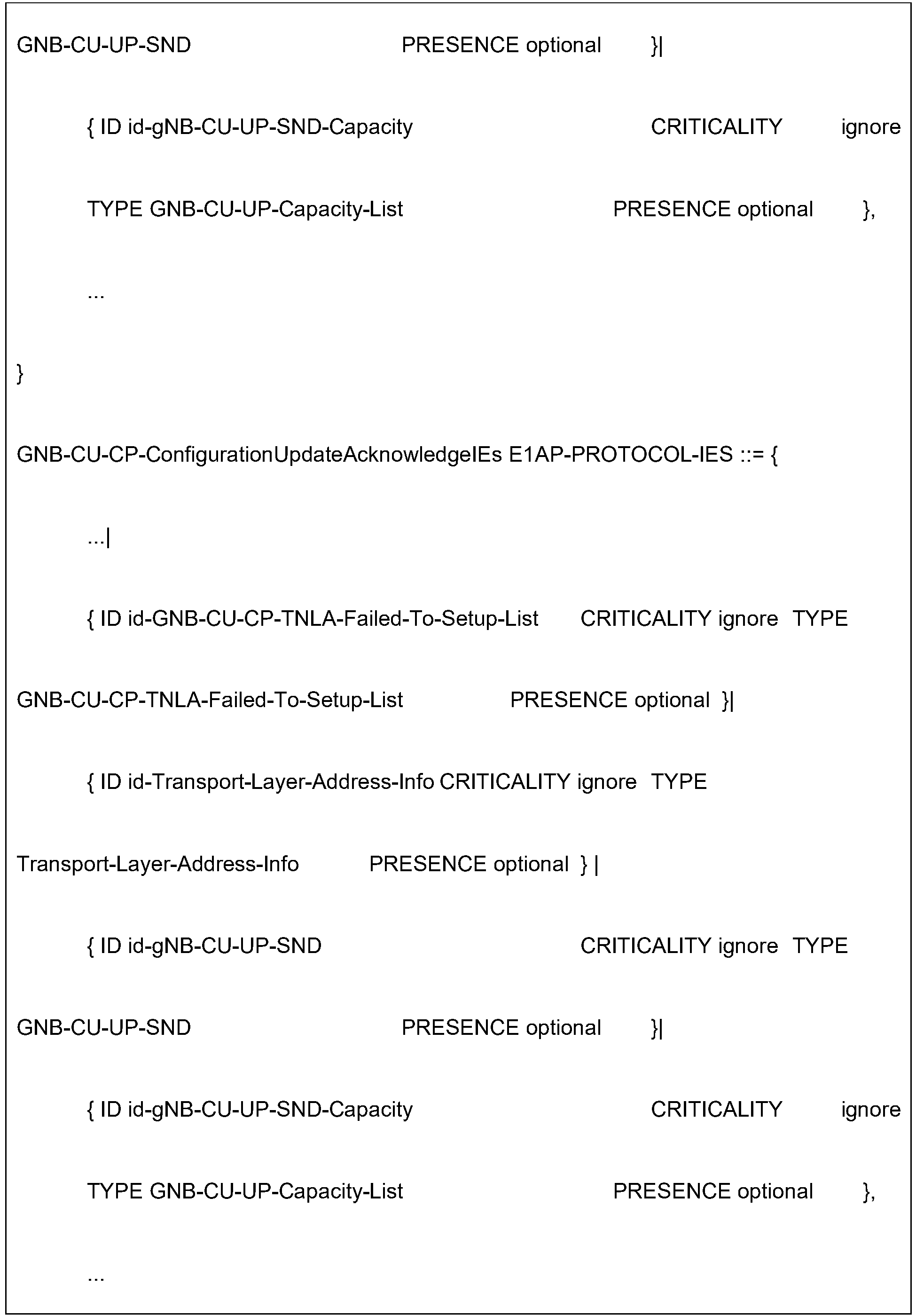

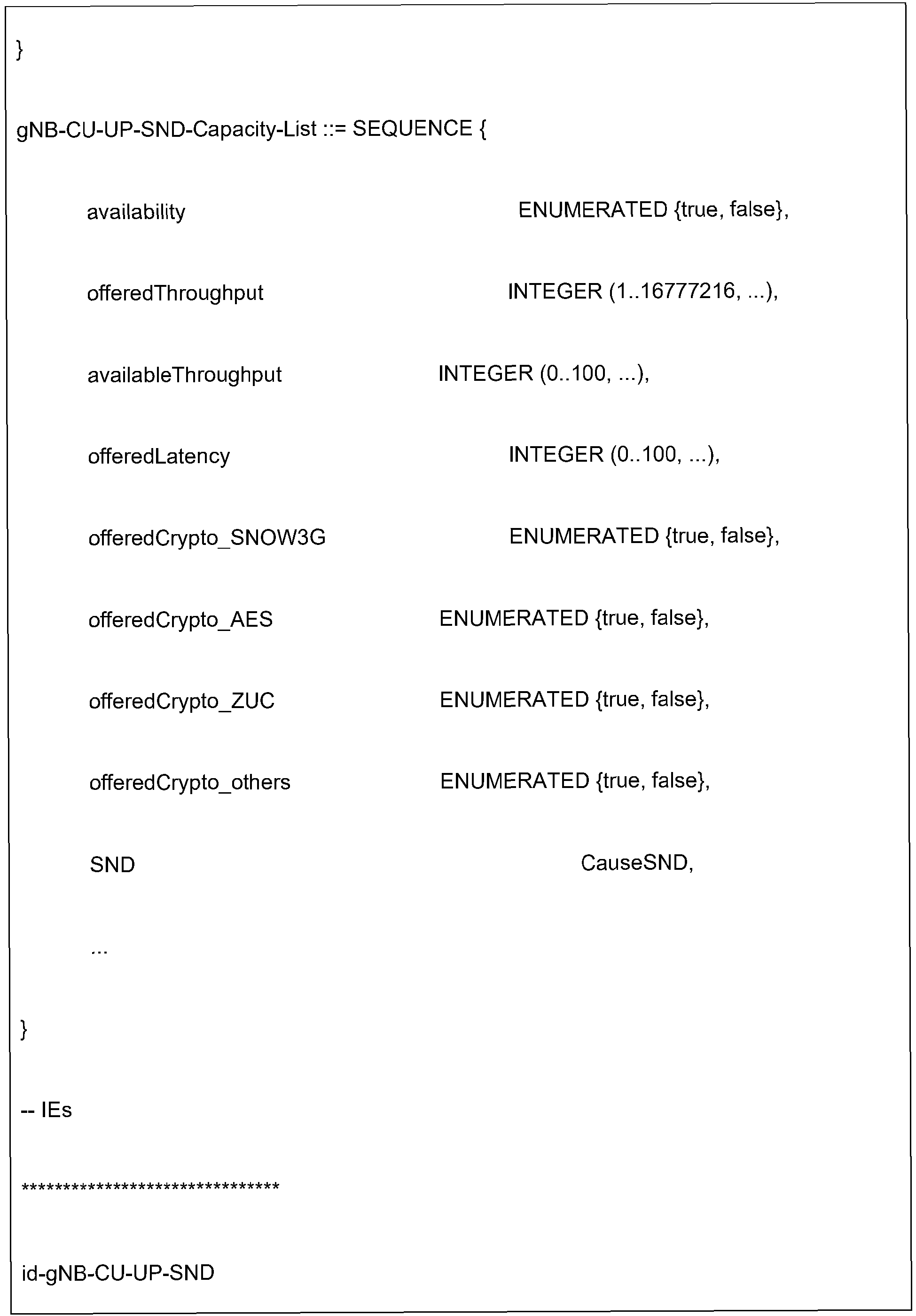

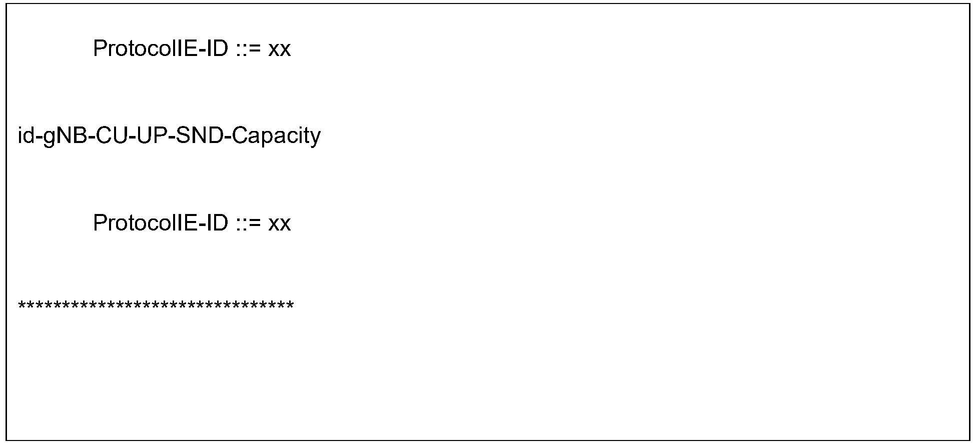

According to an embodiment, when a device capable of assisting a computational function connected to the CU-UP 1200 of the base station exists, a first message including information regarding capability of the device may be transmitted to the CU-CP 1210 of the base station. According to an embodiment, the CU-UP 1200 of the base station may receive a second message related to the first message from the CU-CP 1220 of the base station. According to an embodiment, if the first message is an update request message 1201 of at least one of presence or absence of the device or capability, the second message may be an update response message 1203 corresponding to the first message. According to an embodiment, if the second message is an update request message 1205 of at least one of presence or absence of the device or capability, the first message may be an update response message 1207 corresponding to the second message.

According to an embodiment, the change information regarding the capability of the device may include at least one of information on whether the device is used, throughput provided by the device, throughput available to the device, latency related to the device, and information regarding an encryption algorithm used in the device.

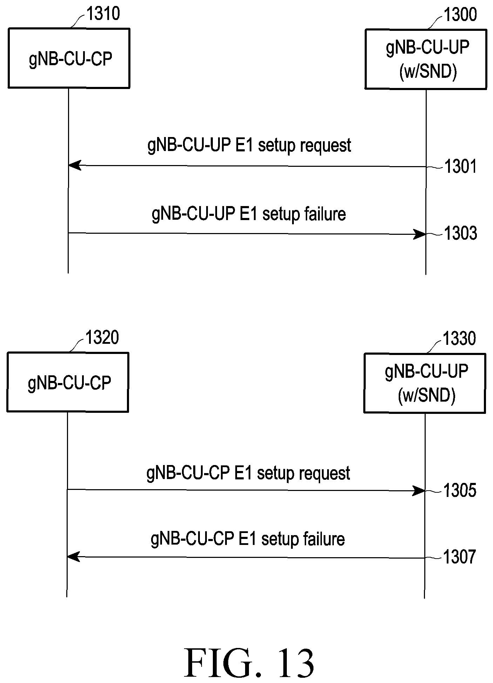

FIG. 13 is a view illustrating an operation when delivery of information about a device capable of assisting a computational function between a CU-CP of a base station and a CU-UP of a base station fails according to an embodiment of the present invention. The Smart Network Device (SND) described in FIG. 13 is an example of a device capable of assisting a computational function.

In operation 1301, it is identified whether there exists a device that is connected to the CU-UP 1300 of the base station and is capable of assisting a computational function of the CU-UP 1300 of the base station, and if the device connected to the CU-UP 1300 of the base station exists, the CU-UP 1300 of the base station may transmit 1301, to the CU-CP 1310 of the base station, an E1 interface setup request message including information indicating presence of the device and information regarding capability of the device.

In operation 1303, when the CU-UP 1300 of the base station transmits the request message according to the operation 1301, the CU-UP 1300 of the base station may receive 1303, from the CU-CP 1310, the E1 interface setup failure message according to the request message.

In operation 1305, the CU-CP 1320 of the base station may transmit 1305, to the CU-UP 1330 of the base station, an E1 interface setup request message to identify the presence or absence of a device capable of assisting a computational function on the CU-UP 1330 side of the base station and information regarding capability of the device.

In operation 1307, when the CU-CP 1320 of the base station transmits the request message according to the operation 1305, the CU-CP 1320 of the base station may receive 1307, from the CU-UP 1330, the E1 interface setup failure message according to the request message. The failure message may include cause information for the E1 interface setup failure.

In operations 1301, 1303, 1305, and 1307, the information regarding the failure cause included in the E1 interface setup failure message may be configured as in [Table 3].

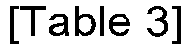

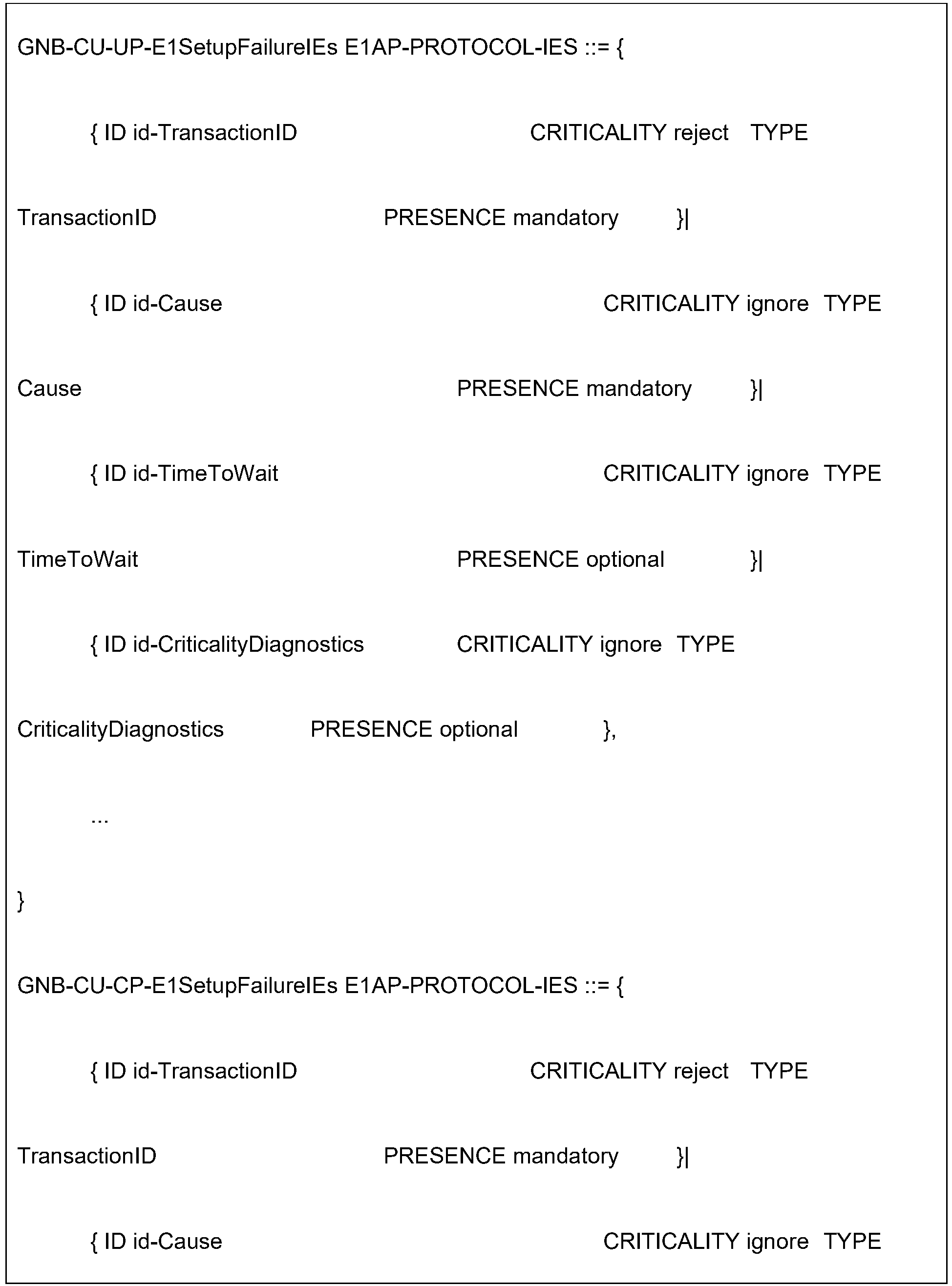

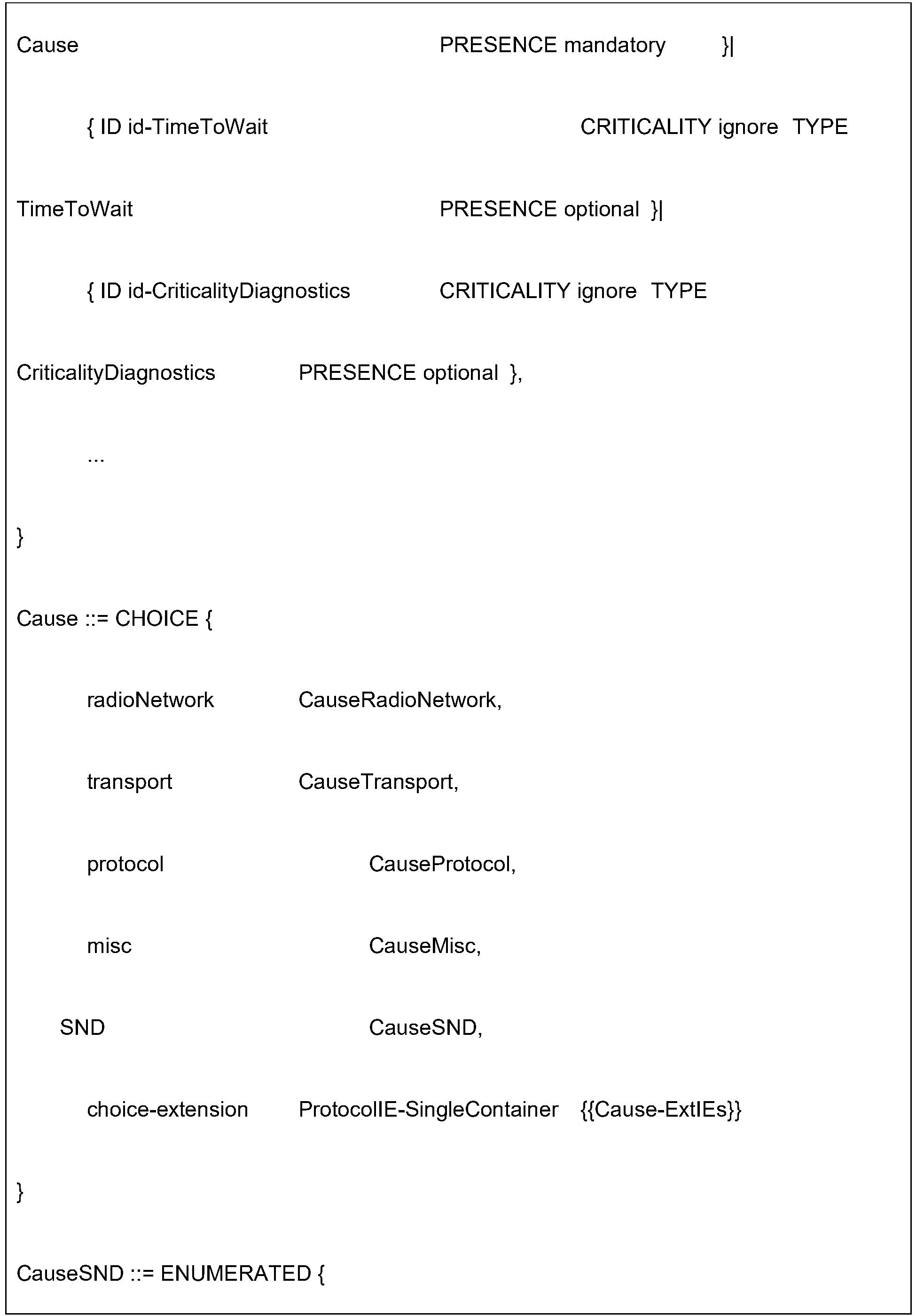

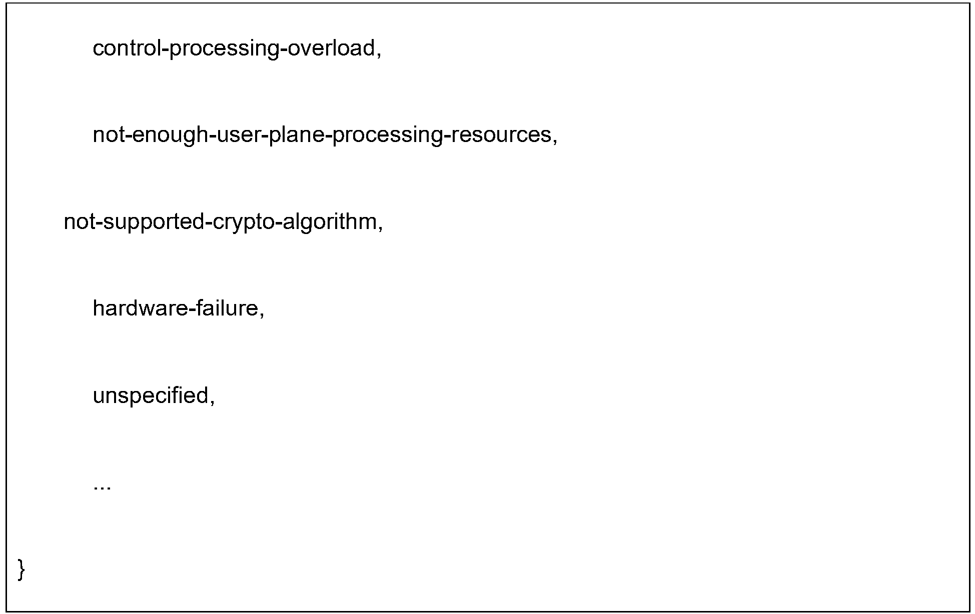

According to an embodiment, when there is a step in which the CU-UP 1300 of the base station transmits, to the CU-CP 1310 of the base station, a first message including the information indicating presence of the device and the information regarding capability of the device, the method further comprises receiving, from the CU-CP 1310 of the base station, a second message corresponding to the first message, wherein if the first message is a request message 1301 for setting up an E1 interface for connecting the CU-UP 1300 of the base station and the CU-CP 1310 of the base station, the second message is a setup failure message 1303 for the E1 interface, and if the second message is a request message 1305 for setting up the E1 interface for connecting the CU-UP 1330 of the base station and the CU-CP 1320 of the base station, the first message may be a setup failure message 1307 for the E1 interface.

According to an embodiment, when the E1 interface setup fails, the cause information for the setup failure message may include at least one of information indicating an overload of a control process of the device, information indicating insufficient processing resources of the CU-UP, information indicating that there is no encryption algorithm supported by the device, information indicating a hardware operation failure of the device, and information indicating an unknown cause of the setup failure.

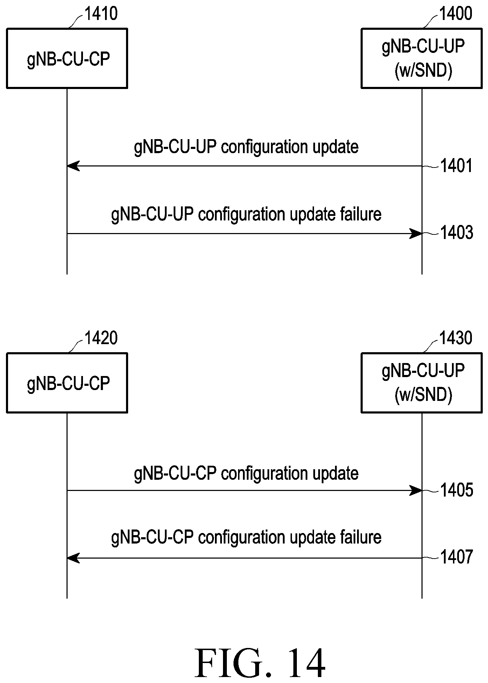

FIG. 14 is a view illustrating, in case of failure to update a change in information about a device capable of assisting a computational function between a CU-CP of a base station and a CU-UP of a base station, the failure according to an embodiment of the present invention. The Smart Network Device (SND) described in FIG. 14 is an example of a device capable of assisting a computational function.

In operation 1401, it is identified whether there is a capability change of a device that is connected to the CU-UP 1400 of the base station and is capable of assisting a computational function of the CU-UP 1400 of the base station, and if there is a capability change of the device, the CU-UP 1400 of the base station may transmit, to the CU-CP 1410 of the base station, an update request message for the capability change of the device.

In operation 1403, when the CU-UP 1400 of the base station transmits the request message according to the operation 1401, the CU-UP 1400 of the base station may receive, from the CU-CP 1410, an update failure message according to the request message.

In operation 1405, the CU-CP 1420 of the base station may transmit, to the CU-UP 1430 of the base station, an update request message to identify whether there is a capability change of a device capable of assisting a computational function on the CU-UP 1230 side of the base station.

In operation 1407, when the CU-CP 1420 of the base station transmits the request message according to the operation 1405, the CU-CP 1420 of the base station may receive, from the CU-UP 1430, an update failure message according to the request message. The failure message may include cause information for the update failure.

In operations 1401, 1403, 1405, and 1407, the message regarding the update failure of the device capable of assisting a computational function may be configured as in [Table 4].

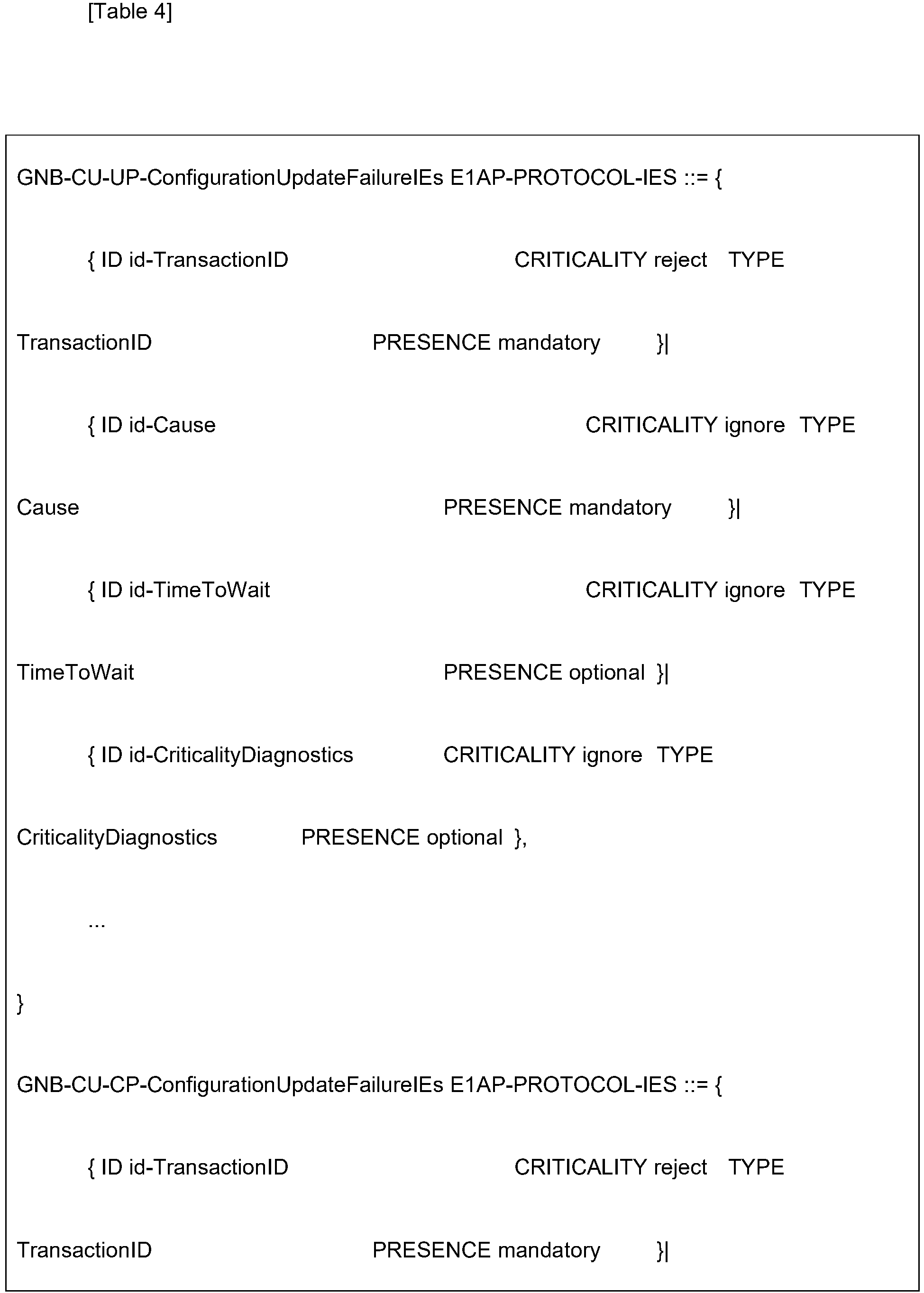

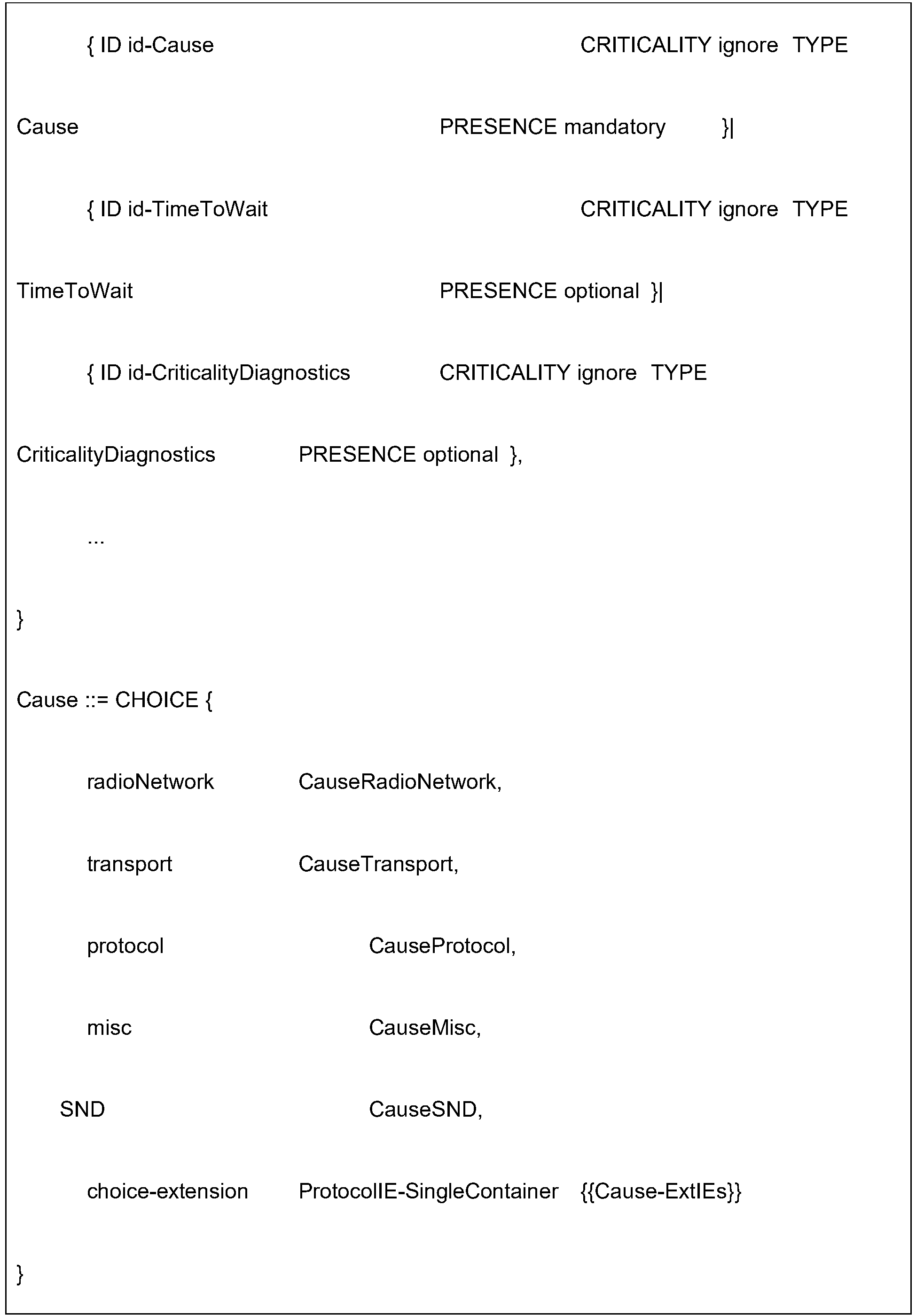

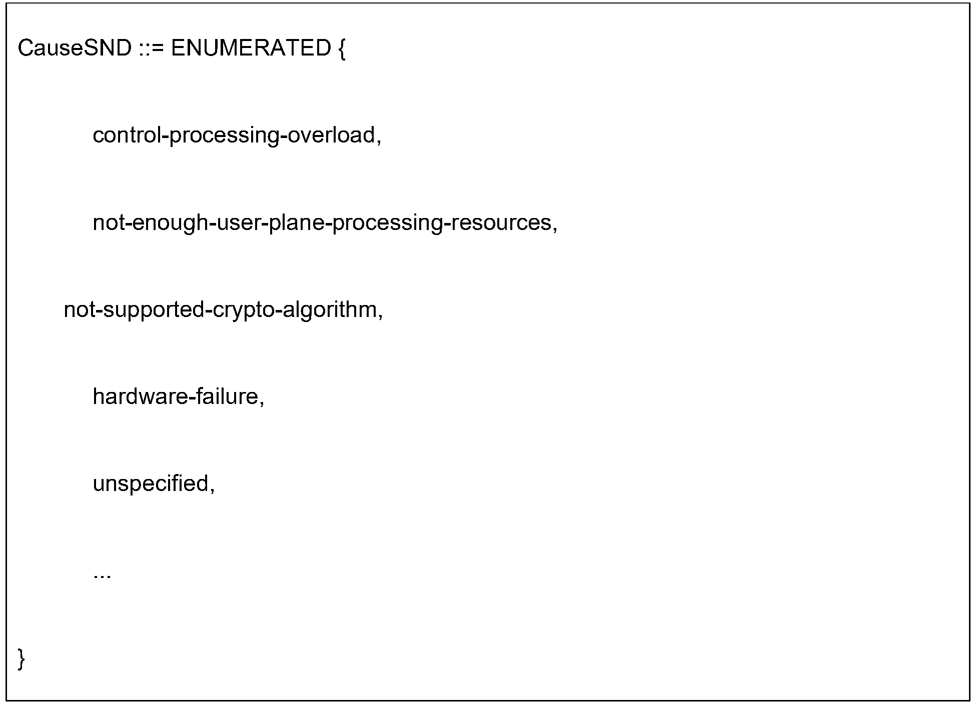

According to an embodiment, when a device capable of assisting a computational function connected to the CU-UP 1400 of the base station exists, a first message including information regarding capability of the device may be transmitted to the CU-CP 1410 of the base station, and when there is a change in at least one of presence or absence of the device or capability, the method further comprises receiving, from the CU-CP 1410 of the base station, a fourth message corresponding to the first message, wherein if the first message is an update request message 1401 of at least one of presence or absence of the device or capability, the fourth message is an update failure message 1403 corresponding to the first message, and if the fourth message is an update request message 1405 of at least one of presence or absence of the device or capability, the first message may be an update failure message 1407 corresponding to the first message.

According to an embodiment, the cause information for the update failure message may include at least one of information indicating an overload of a control process of the device, information indicating insufficient processing resources of the CU-UP, information indicating that there is no encryption algorithm supported by the device, information indicating a hardware operation failure of the device, and information indicating an unknown cause of the update failure.

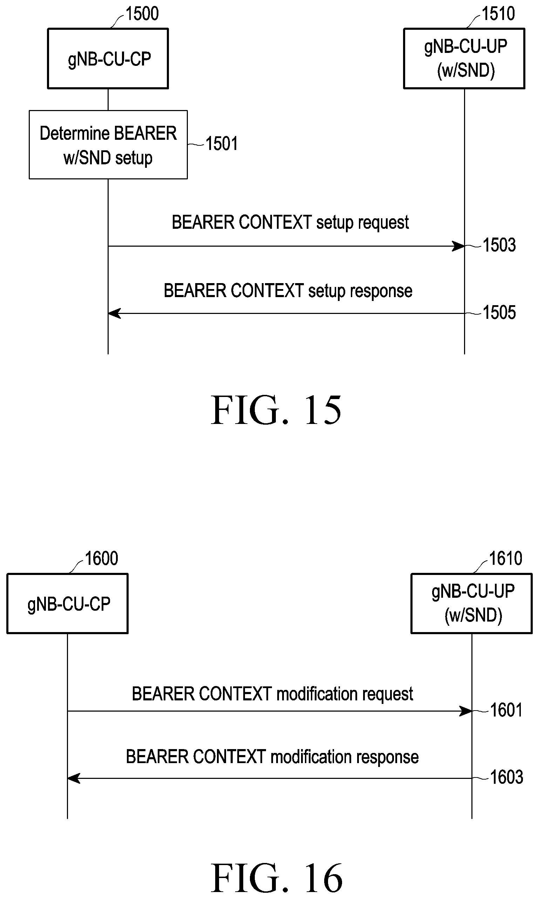

FIG. 15 is a view illustrating bearer setup between a CU-CP of a base station and a CU-UP of a base station according to an embodiment of the present invention. The Smart Network Device (SND) described in FIG. 15 is an example of a device capable of assisting a computational function.

In operation 1501, the CU-CP 1500 of the base station may determine whether traffic will be processed by the device, in consideration of a traffic context with the CU-UP 1510 of the base station, presence or absence of a device capable of assisting a computational function on the CU-UP 1510 side of the base station, and a state of the device, and the like.

According to an embodiment, the traffic context in operation 1501 may include at least one of the following, and is not limited to the following examples.
- As information of a terminal (UE), a context of the terminal
- As traffic information, information of a PDU (Packet Data Unit) session, information on SDAP, information on PDCP, information on TCP/UDP/IP (Transmission Control Protocol/User Datagram Protocol/Internet Protocol), information on QUIC (Quick UDP Internet Connections)
- As security information, a security context of the base station, IPsec (Internet Protocol security) information
- As a Security Policy, "required", "preferred", "not needed"
- As information of the CU-UP of the base station, information on throughput provided by the device, throughput available to the device, and latency related to the device

According to an embodiment, the state of the device capable of assisting the computational function on the CU-UP 1510 side of the base station may include at least one of the following, and is not limited to the following examples.
- Throughput provided by the device
- Throughput available to the device
- Information on latency related to the device

In operation 1503, the CU-CP 1500 of the base station may determine whether to perform bearer setup according to the operation 1501, and then transmit, to the CU-UP 1510 of the base station, a request message for bearer context setup.

In operation 1505, the CU-CP 1500 of the base station may receive, from the CU-UP 1510 of the base station, a response message corresponding to the request message according to the operation 1503.

In operations 1501, 1503, and 1505, the information included in the request message for bearer context setup may be configured as in [Table 5].

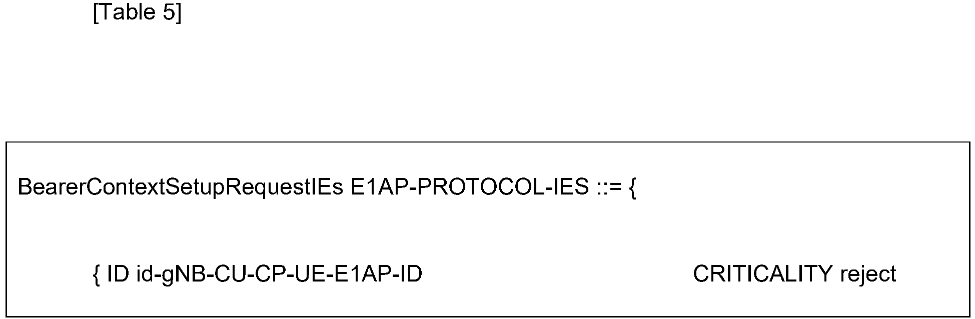

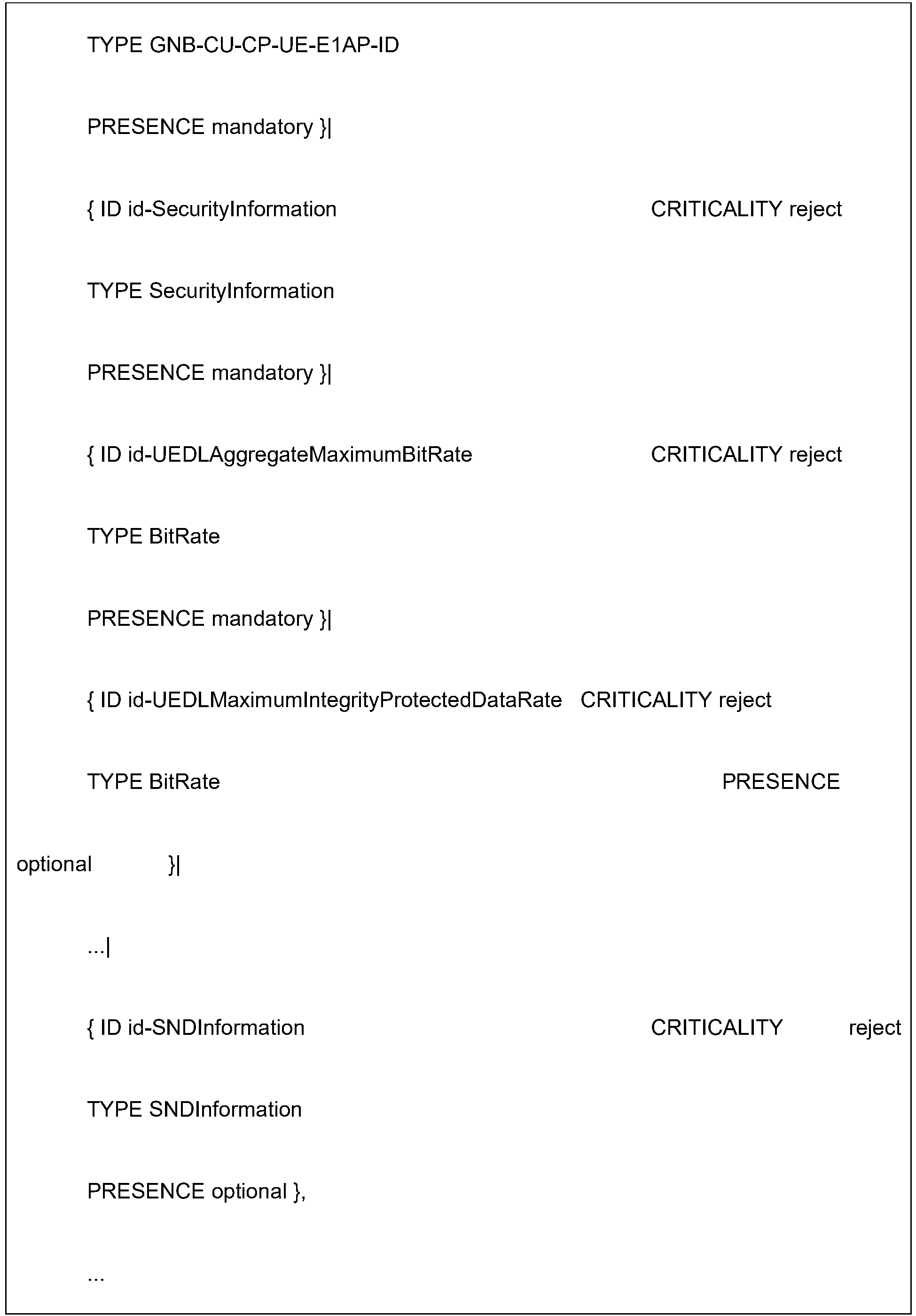

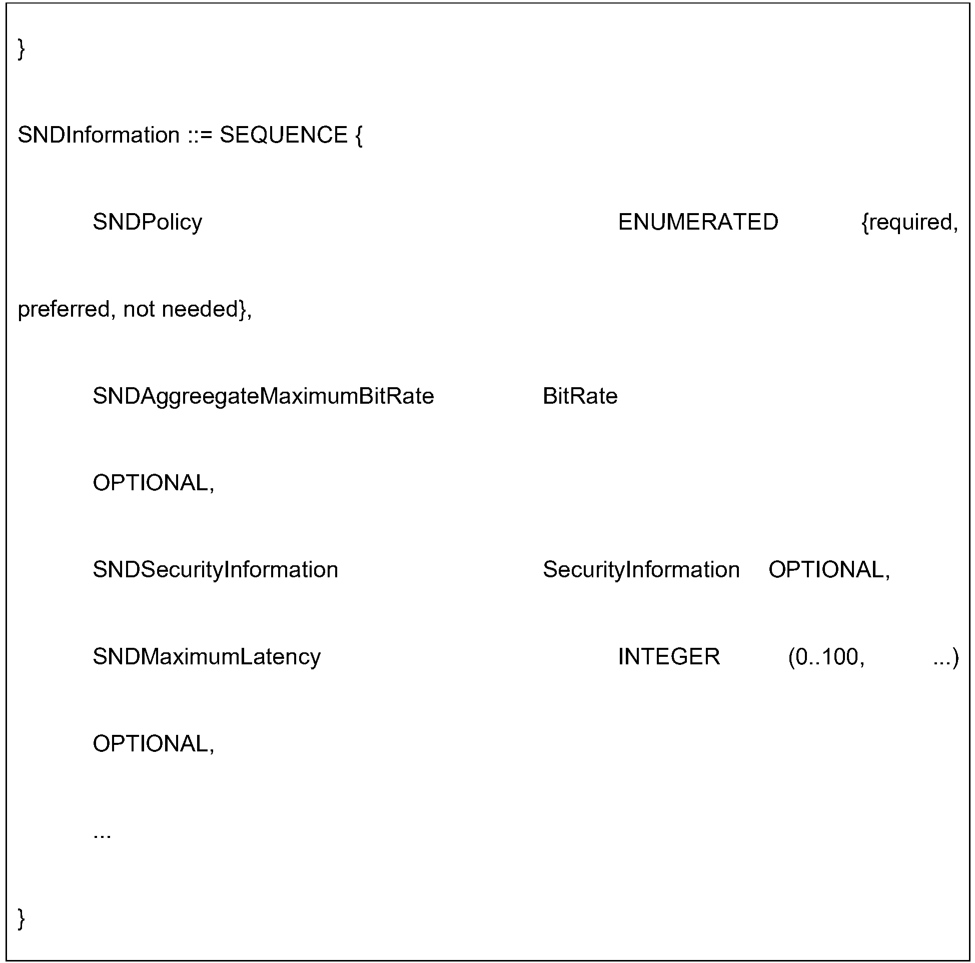

According to an embodiment, the method may include the step of transmitting a request message for setting up a bearer context between the CU-CP 1500 of the base station and the CU-UP 1510 of the base station, wherein the information included in the request message may include at least one of data processing requirement information that the bearer should provide, information on a policy of the device, information on a maximum bitrate aggregation of the device, security information of the device, and a maximum latency related to the device.

FIG. 16 is a view illustrating, when a CU-CP of a base station requests modification of a bearer context from a CU-UP of a base station, the request according to an embodiment of the present invention. The Smart Network Device (SND) described in FIG. 16 is an example of a device capable of assisting a computational function.

In operation 1601, the CU-CP 1600 of the base station may transmit, to the CU-UP 1610 of the base station, a request message for modifying a bearer context.

In operation 1603, the CU-CP 1600 of the base station may receive, from the CU-UP 1610 of the base station, a response message corresponding to the request message according to the operation 1601.

In operations 1601 and 1603, the information included in the request message for modifying the bearer context may be configured as in [Table 6].

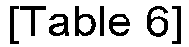

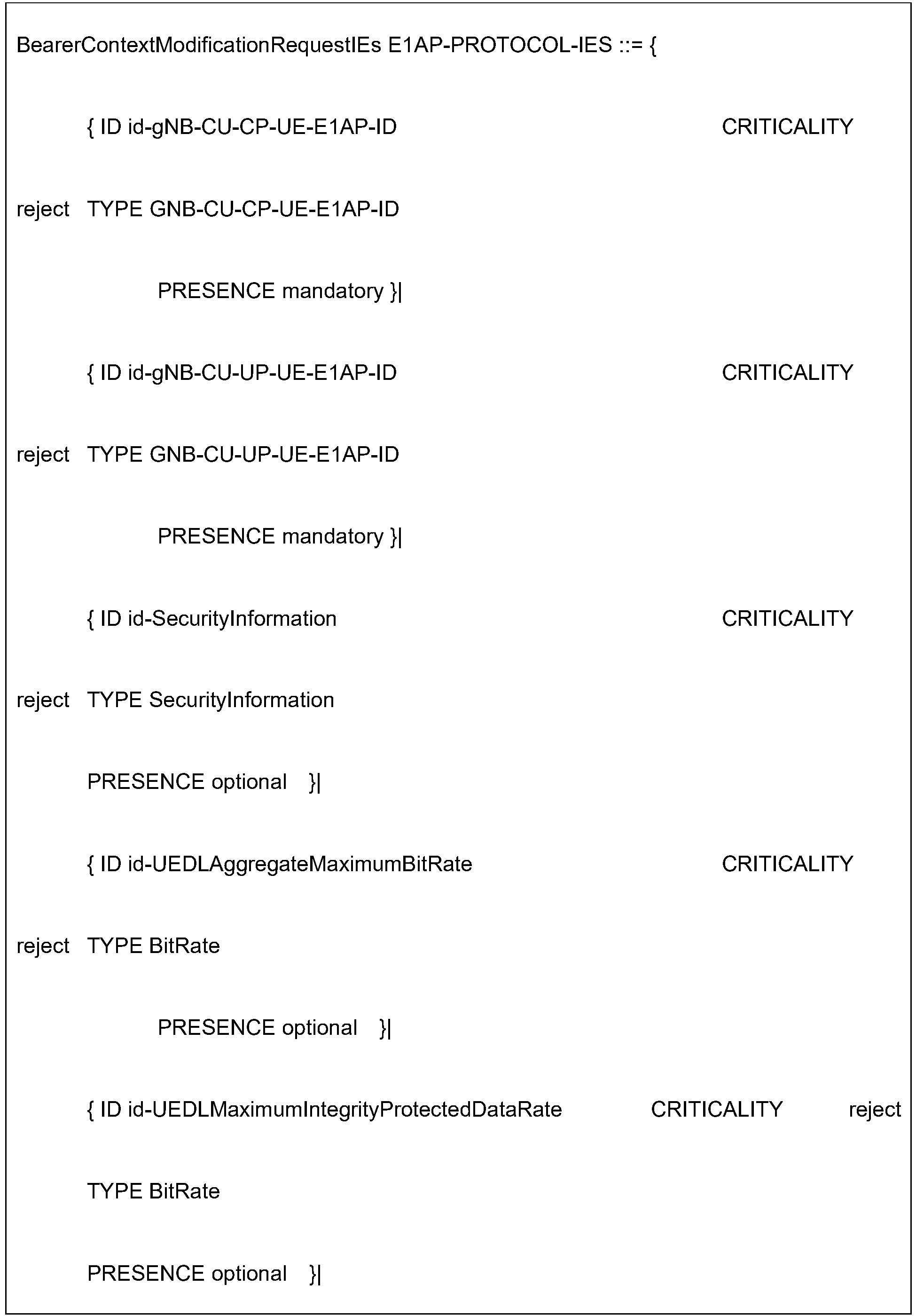

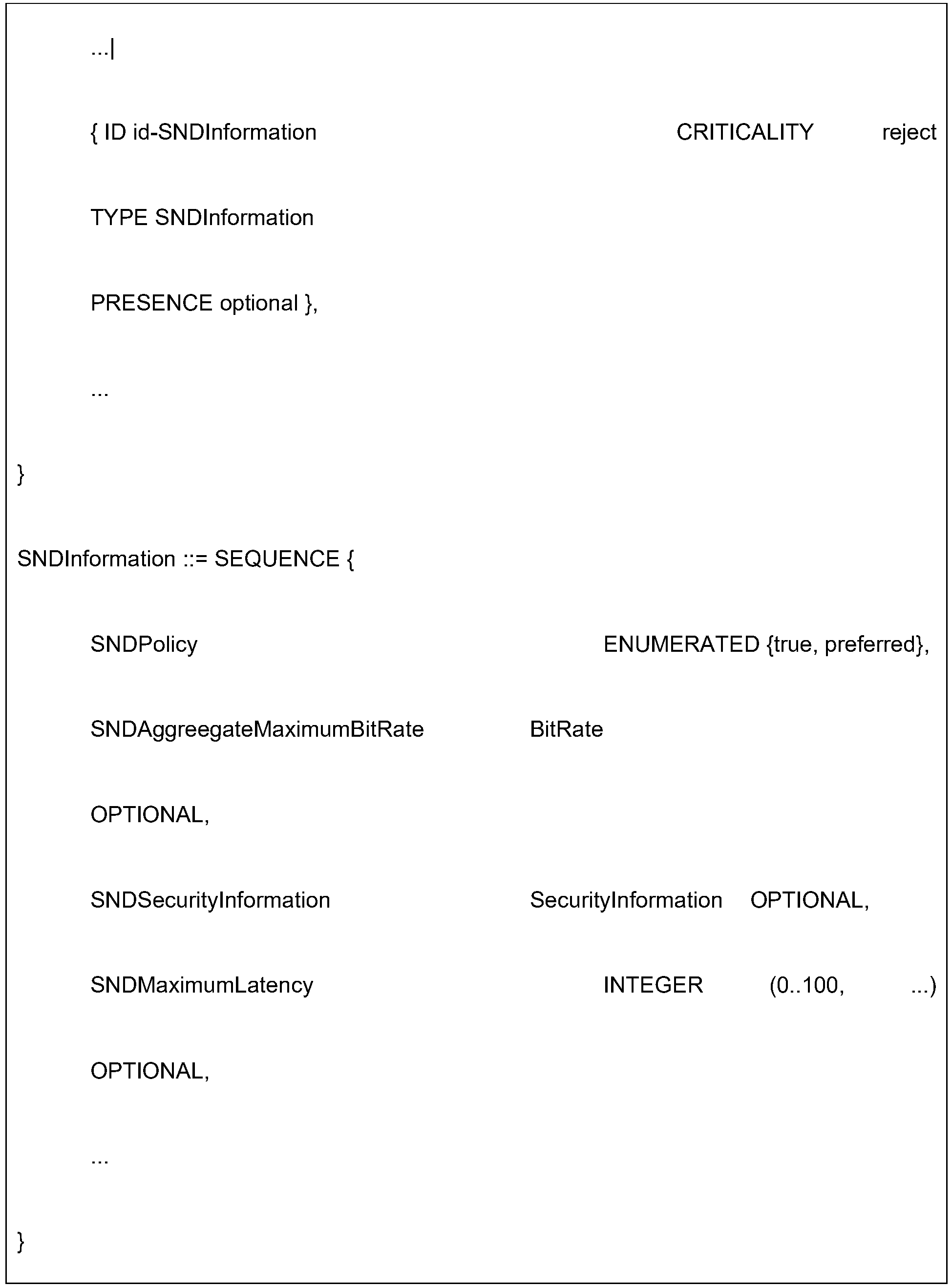

According to an embodiment, the information included in the request message for modifying the bearer context between the CU-CP of the base station and the CU-UP of the base station may include at least one of data processing requirement information that the bearer should provide, information on a policy of the device, information on a maximum bitrate aggregation of the device, security information of the device, and a maximum latency related to the device.

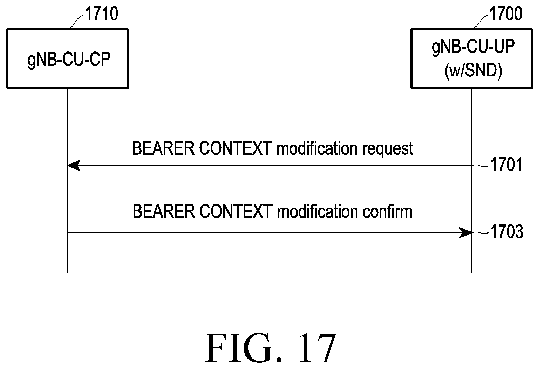

FIG. 17 is a view illustrating, when a CU-UP of a base station requests modification of a bearer context from a CU-CP of a base station, the request according to an embodiment of the present invention. The Smart Network Device (SND) described in FIG. 17 is an example of a device capable of assisting a computational function.

In operation 1701, the CU-UP 1700 of the base station may transmit, to the CU-CP 1710 of the base station, a request message for modifying a bearer context.

In operation 1703, the CU-UP 1700 of the base station may receive, from the CU-CP 1710 of the base station, a response message corresponding to the request message according to the operation 1701.

In operations 1701 and 1703, the information included in the request message for modifying the bearer context may be configured as in [Table 7].

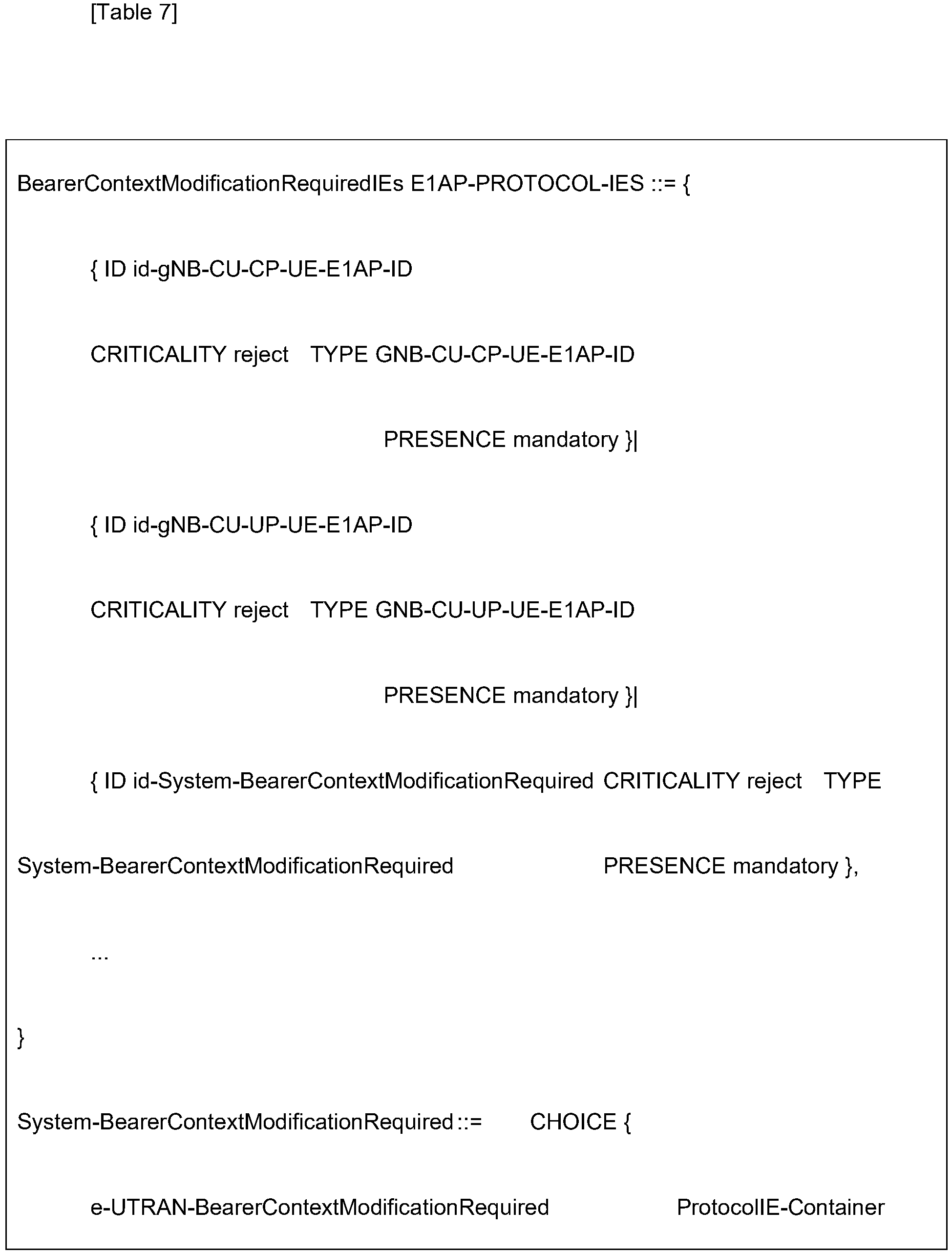

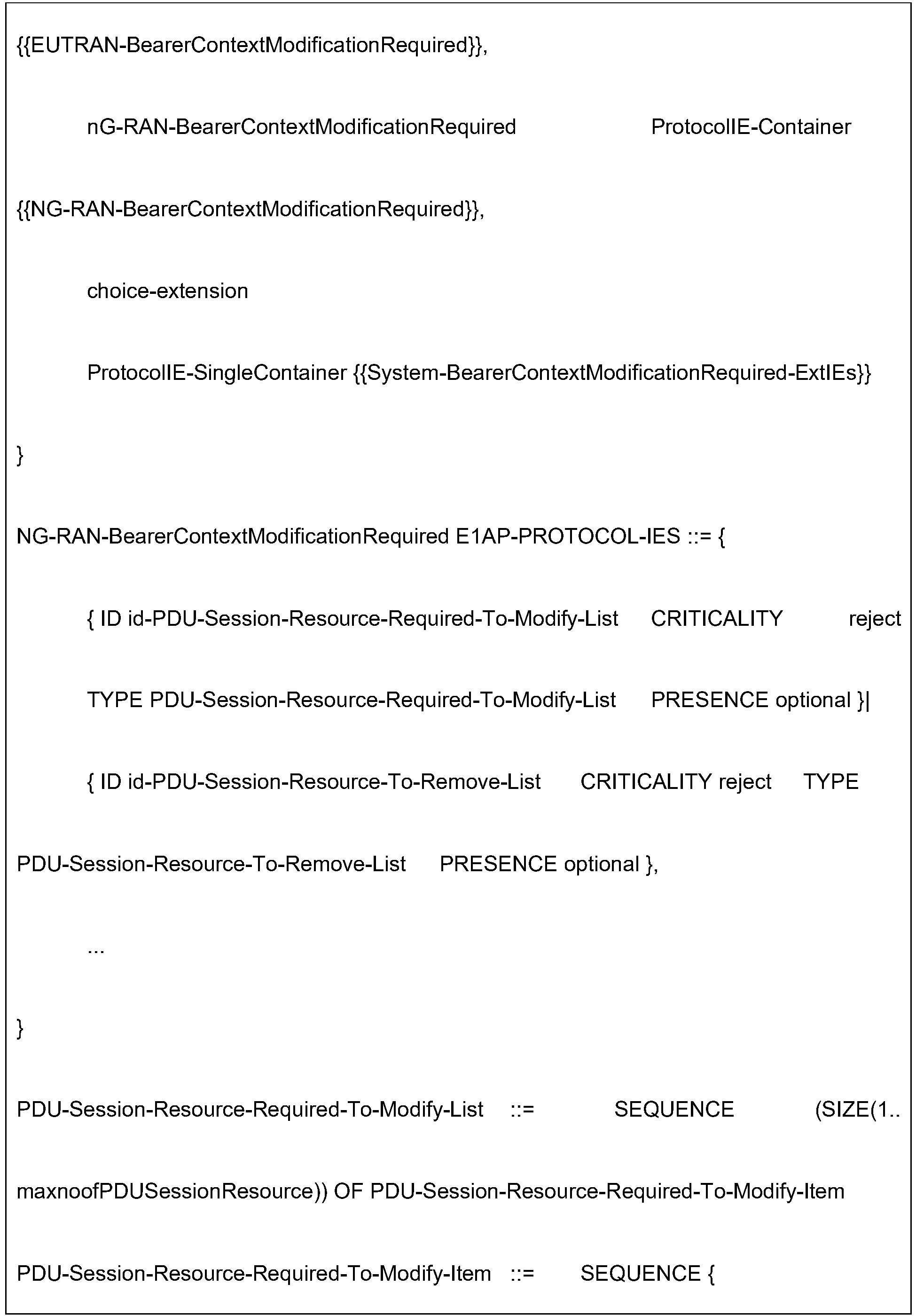

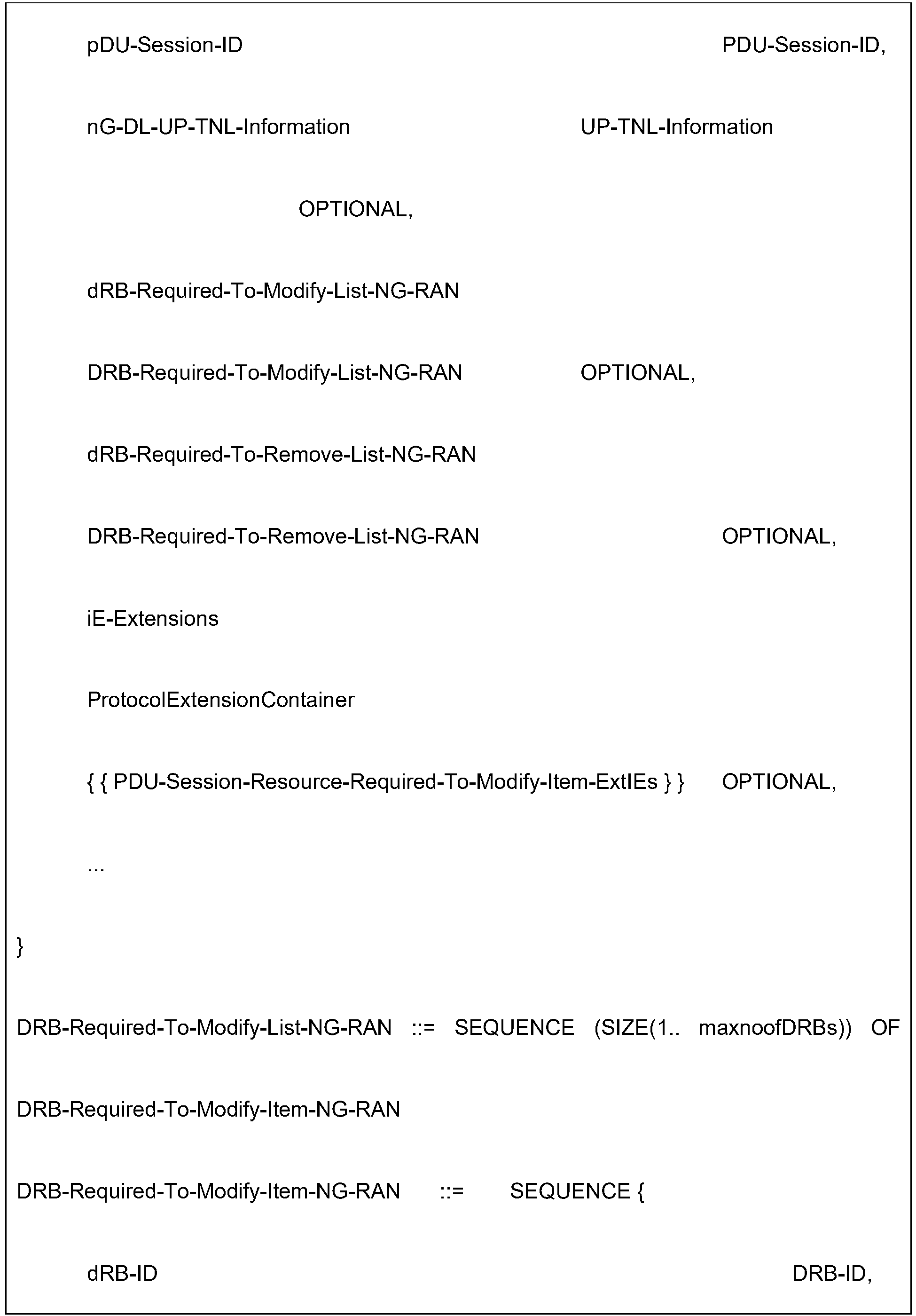

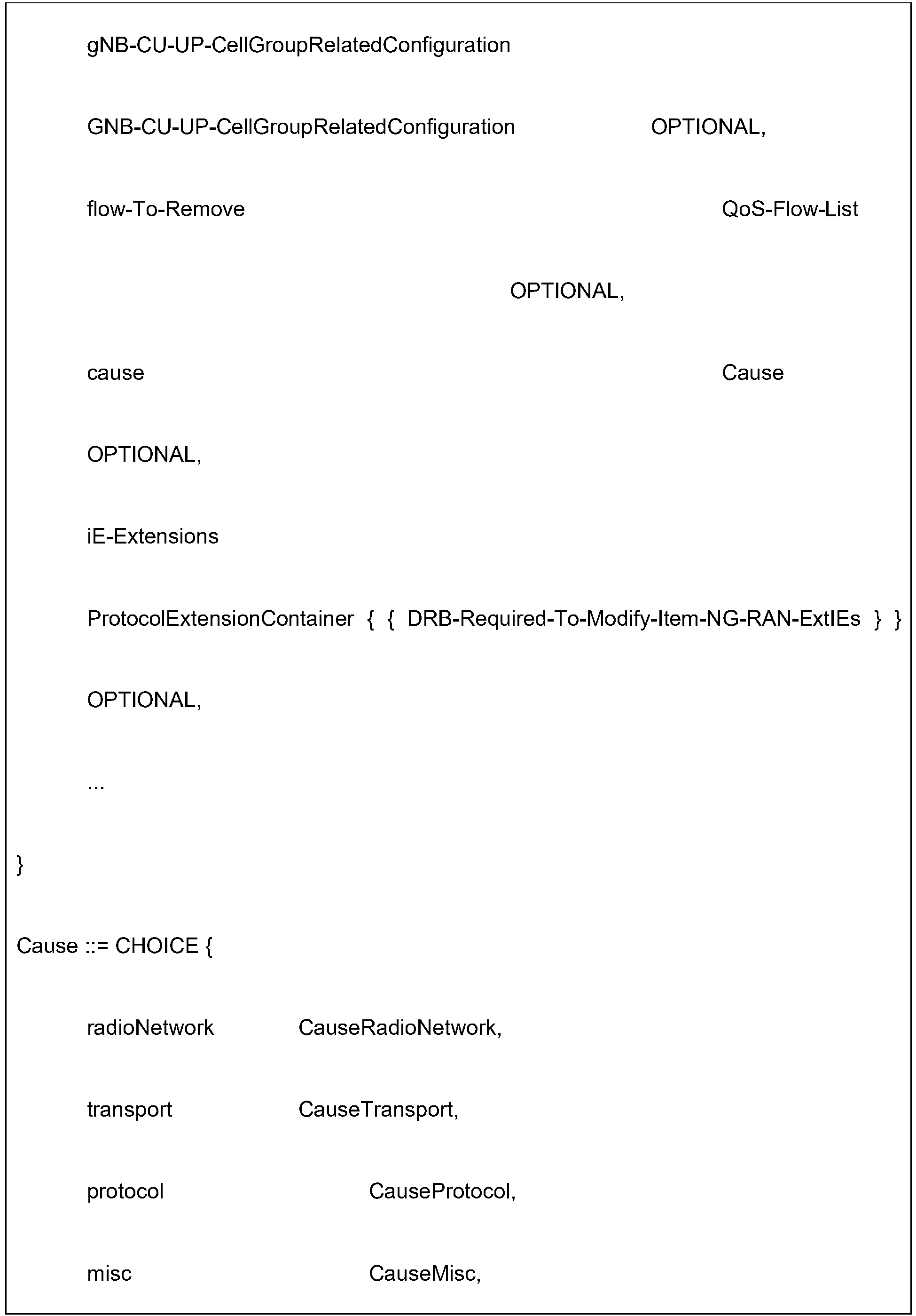

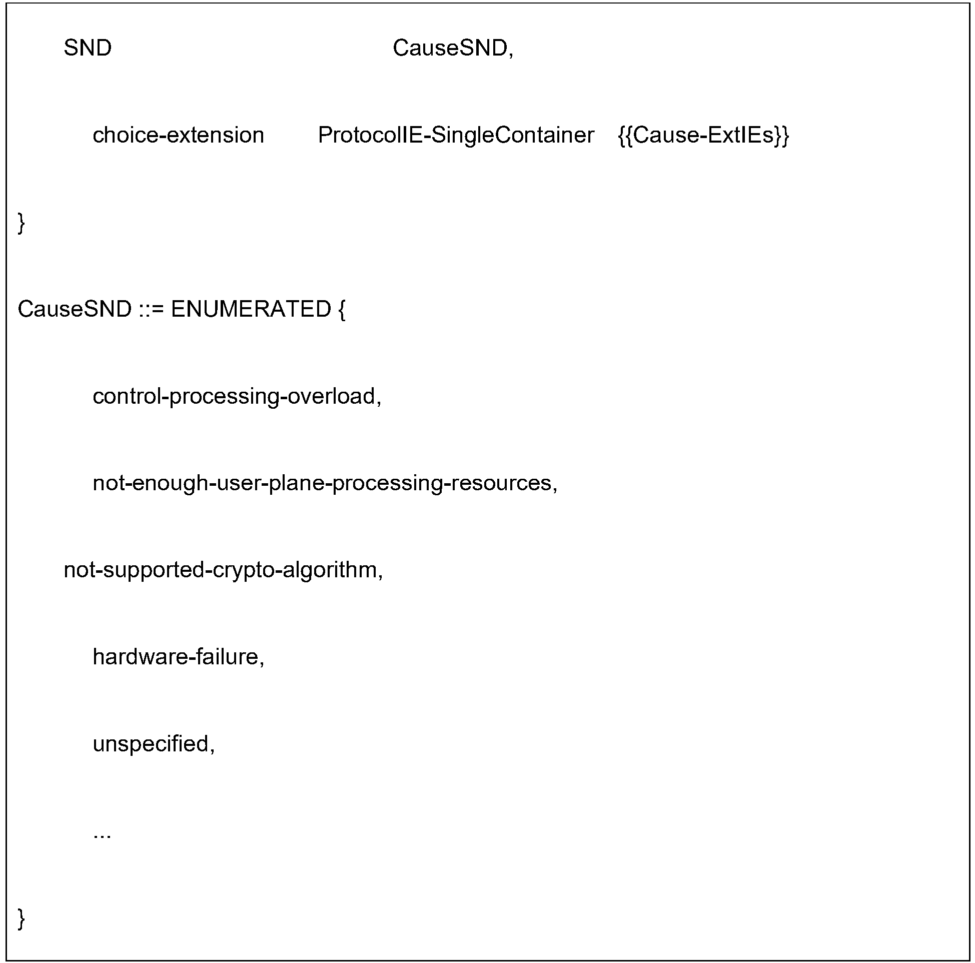

According to an embodiment, the information included in the request message for modifying the bearer context between the CU-CP 1710 of the base station and the CU-UP 1700 of the base station may include at least one of bearer context information to be modified, information indicating an overload of a control process of the device, information indicating insufficient processing resources of the CU-UP, information indicating that there is no encryption algorithm supported by the device, information indicating a hardware operation failure of the device, and information indicating an unknown cause of the setup failure.

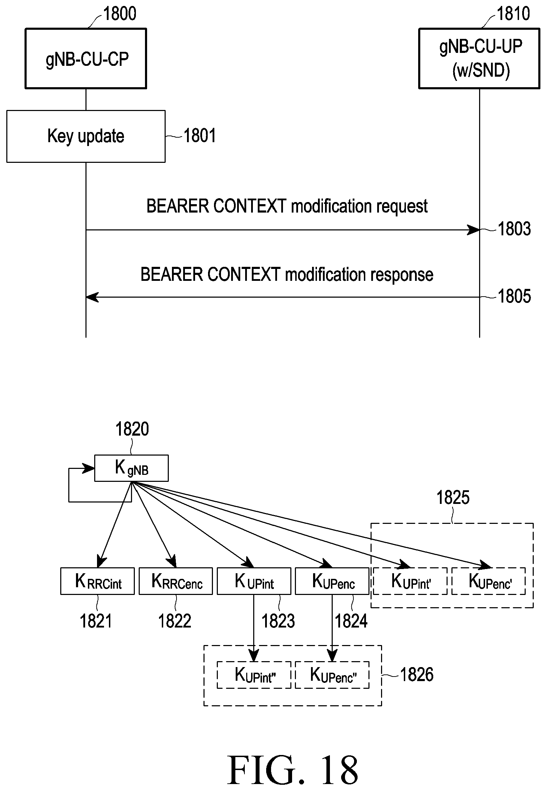

FIG. 18 is a view illustrating, when there is content regarding security information at the time of a request for modification of a bearer context from a CU-CP of a base station to a CU-UP of a base station, the content according to an embodiment of the present invention.

Referring to FIG. 18, when the CU-CP 1800 of the base station performs a security key Update 1801, the CU-CP 1800 of the base station may also include information on the security key update in a request message for modifying a bearer context of a device capable of assisting a computational function on the CU-UP 1810 side of the base station.

The CU-CP 1800 of the base station may transmit 1803 the request message, and receive 1805, from the CU-UP of the base station, a response message corresponding to the request message.

Meanwhile, a security key 1820 in the base station includes Security Contexts 1821, 1822, 1823, 1824, and when there is a change 1825, 1826 in at least some of them, a security key update is performed. Although FIG. 18 illustrates, for convenience of description, four security contexts 1821, 1822, 1823, 1824, the technical idea of the present invention is not limited thereto, and various numbers of security contexts may be included. The Smart Network Device (SND) described in FIG. 18 is an example of a device capable of assisting a computational function.

The cases where the security key update is performed may be at least one of the following, and are not limited to the following examples.
- Handover between the CU-UP and the CU-CP of the base station
- Handover between the devices when there are multiple devices
- Expiration of the usage period of the security key of the device
- When the CU-CP of the base station determines it is necessary

The keys for control plane (RRC, Radio Resource Control) traffic are as follows.
- K_{RRCint} (1821) is a key used for protection of radio resource control (RRC) traffic by a specific integrity algorithm. K_{RRCint} (1821) is derived by the mobile communication device and the macro base station from K_{gNB} as well as an identifier for the integrity algorithm, using a Key Derivation Function (KDF) with inputs as specified in clause A.7 of 3GPP TS 33.401.
- K_{RRCenc} (1822) is a key used for protection of RRC traffic by a specific encryption algorithm. K_{RRCenc} (1822) is derived by the mobile communication device and the macro base station from K_{gNB} as well as an identifier for the encryption algorithm, using a Key Derivation Function (KDF) with inputs as specified in clause A.7 of 3GPP TS 33.401.

The keys for User Plane (UP) traffic are as follows.
- K_{UPint} (1823) is a key used for protection of UP traffic between a Relay Node (RN) and a Donor eNB (DeNB) by a specific integrity algorithm. The key is derived by the RN and the DeNB from K_{gNB} as well as an identifier for the integrity algorithm, using a Key Derivation Function (KDF) with inputs as specified in clause A.7 of 3GPP TS 33.401.
- K_{UPenc} (1824) is a key used for protection of UP traffic by a specific encryption algorithm. This key is derived by the mobile communication device and the macro base station from K_{gNB} as well as an identifier for the encryption algorithm, using a Key Derivation Function (KDF) with inputs as specified in clause A.7 of 3GPP TS 33.401. In the case of User-Plane/Control-Plane separation between a pico base station and a macro base station, K_{UPenc} (1824) is obtained at the pico base station for use in protection of UP traffic by a specific encryption algorithm.

In operation 1801, the CU-CP of the base station performs a security key update 1801 when there is a change 1825, 1826 in the security information 1820 within the base station.

In operation 1803, the CU-CP 1800 of the base station may transmit, to the CU-UP 1810 of the base station, a request message for modifying a bearer context. The request message may further include an update for the security information (including at least one of 1823, 1824, 1825, 1826).

In operation 1805, the CU-CP 1800 of the base station may receive, from the CU-UP 1810 of the base station, a response message corresponding to the request message according to the operation 1803.

In operation 1825, the security key update of the CU-UP 1810 of the base station may mean a context change of at least one of K_{UPint} and K_{UPenc} when generated from the security key 1820 of the base station or when there is a change in the existing K_{UPint} and K_{UPenc}.

In operation 1826, the security key update of the CU-UP 1810 of the base station may mean a context change of at least one of K_{UPint} and K_{UPenc} when only the security key change is made independently.

According to an embodiment, when there is an update of the security information within the base station, the update information included in the request message for modifying the bearer context from the CU-CP 1800 of the base station to the CU-UP 1810 may include at least one of handover between the CU-UP and the CU-CP of the base station, handover between the devices when there are multiple devices, information on expiration of the usage period of the security key of the device, and information on a decision made by the CU-CP of the base station.

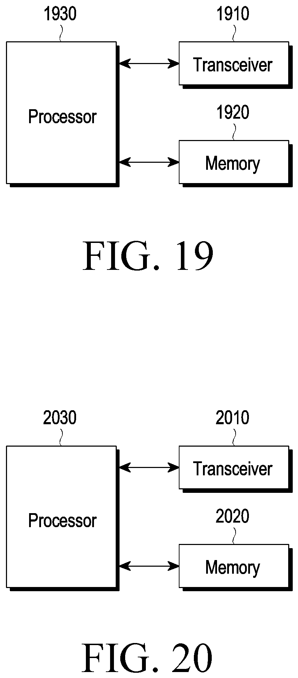

FIG. 19 is a block diagram illustrating a base station including a CU-CP according to embodiments of the present invention.

The base station of FIG. 19 may be implemented as the base station, the eNB, the gNB, the source base station, or the target base station illustrated in FIGS. 1 to 18. Referring to FIG. 19, the base station may include a transceiver 1910, memory 1920, and a controller 1930.

The transceiver 1910 may transmit/receive signals to/from a terminal, another base station, or a device. The transceiver 1910 may also be referred to as a transceiver. The transceiver 1910 may include a transmitter and a receiver.

The memory 1920 may store at least one of information transmitted/received through the transceiver 1910 and information generated through the controller 1930.

The controller 1930 may be defined as a circuit, an application specific integrated circuit, or at least one processor. The controller 1930 may control overall operations of the base station according to the embodiments proposed in the disclosure. For example, the controller 1930 may control signal flow between blocks to perform operations according to the flowcharts described above. Specifically, the controller 1930 may control operations of, e.g., the base station, the eNB, the gNB, the source base station, or the target base station illustrated in FIGS. 1 to 18.

According to an embodiment, the controller 1930 may transmit, to the CU-UP of the base station, a request message for setting up an E1 interface to connect the CU-UP of the base station and the CU-CP of the base station, in order to identify information indicating presence of a device that is connected to a central unit-user plane (CU-UP) of the base station and is capable of assisting a computational function of the CU-UP of the base station and information regarding capability of the device. According to an embodiment, the controller 1930 may transmit, to the CU-UP of the base station, a request message for setting up a bearer context between the CU-UP of the base station and the CU-CP of the base station.

According to an embodiment, the controller 1930 may receive, from the CU-UP of the base station, a first message including first information indicating presence of a device that is connected to the central unit-user plane (CU-UP) of the base station and is capable of assisting a computational function of the CU-UP of the base station and second information regarding capability of the device.

According to an embodiment, the controller 1930 may transmit, to the CU-UP of the base station, a second message corresponding to the first message, and may transmit/receive such that if the first message is a request message for setting up an E1 interface for connecting the CU-UP of the base station and the CU-CP of the base station, the second message is a setup response message for the E1 interface, and if the second message is a request message for setting up the E1 interface for connecting the CU-UP of the base station and the CU-CP of the base station, the first message is a setup response message for the E1 interface.

According to an embodiment, the controller 1930 may transmit, to the CU-UP of the base station, a second message corresponding to the first message, and may transmit/receive such that if the first message is a request message for setting up an E1 interface for connecting the CU-UP of the base station and the CU-CP of the base station, the second message is a setup response message for the E1 interface, and if the second message is a request message for setting up the E1 interface for connecting the CU-UP of the base station and the CU-CP of the base station, the first message is a setup response message for the E1 interface.

According to an embodiment, the controller 1930 may, when there is a change in at least one of the first information and the second information, transmit, to the CU-UP of the base station, a third message corresponding to the first message, and may transmit/receive such that if the first message is an update request message of the first information and the second information, the third message is an update response message of the first information and the second information, and if the third message is an update request message of the first information and the second information, the first message is an update response message of the first information and the second information.

According to an embodiment, the controller 1930 may transmit a request message for setting up a bearer context between the CU-CP of the base station and the CU-UP of the base station, wherein the first message is a response message to the request message, and the information included in the request message may include at least one of information on a policy of the device, information on a maximum bitrate aggregation of the device, security information of the device, and a maximum latency related to the device.

FIG. 20 is a block diagram illustrating a base station including a CU-UP according to embodiments of the present invention.

The base station of FIG. 20 may be implemented as the base station, the eNB, the gNB, the source base station, or the target base station illustrated in FIGS. 1 to 18. Referring to FIG. 18, the base station may include a transceiver 2010, memory 2020, and a controller 2030.

The transceiver 2010 may transmit/receive signals to/from a terminal, another base station, or a device. The transceiver 2010 may also be referred to as a transceiver unit. The transceiver 2010 may include a transmitter and a receiver.

The memory 2020 may store at least one of information transmitted/received through the transceiver 2010 and information generated through the controller 2030.

The controller 2030 may be defined as a circuit, an application specific integrated circuit, or at least one processor. The controller 2030 may control overall operations of the base station according to the embodiments proposed in the disclosure. For example, the controller 2030 may control signal flow between blocks to perform operations according to the flowcharts described above. Specifically, the controller 2030 may control operations of, e.g., the base station, the eNB, the gNB, the source base station, or the target base station illustrated in FIGS. 1 to 18.

According to an embodiment, the controller 2030 includes a transceiver; and at least one processor, wherein the at least one processor may identify whether there exists a device that is connected to the CU-UP of the base station and is capable of assisting a computational function, and if the device connected to the CU-UP of the base station exists, transmit, to a central unit-control plane (CU-CP) of the base station, a request message for setting up an E1 interface to deliver information indicating presence of the device and information regarding capability of the device.

According to an embodiment, when there is a change in the information regarding the capability of the device, the controller 2030 may transmit, to the CU-CP of the base station, at least one of information on whether the device is used, throughput provided by the device, throughput available to the device, latency related to the device, and information regarding an encryption algorithm used in the device.

According to an embodiment, when there is a modification of a bearer context between the CU-UP of the base station and the CU-CP of the base station, the controller 2030 may transmit, to the CU-CP of the base station, at least one of information indicating an overload of a control process of the device, information indicating insufficient processing resources of the CU-UP, information indicating that there is no encryption algorithm supported by the device, information indicating a hardware operation failure of the device, and information indicating an unknown cause of the setup failure.

According to an embodiment, the controller 2030 may identify whether there exists a device that is connected to the CU-UP of the base station and is capable of assisting a computational function of the CU-UP of the base station, and if the device connected to the CU-UP of the base station exists, transmit, to the central unit-control plane (CU-CP) of the base station, a first message including first information indicating presence of the device and second information regarding capability of the device.

According to an embodiment, the controller 2030 may receive, from the CU-CP of the base station, a second message corresponding to the first message, and may perform transmission/reception such that if the first message is a request message for setting up an E1 interface for connecting the CU-UP of the base station and the CU-CP of the base station, the second message is a setup response message for the E1 interface, and if the second message is a request message for setting up the E1 interface for connecting the CU-UP of the base station and the CU-CP of the base station, the first message is a setup response message for the E1 interface.

According to an embodiment, the controller 2030 may transmit, to the CU-CP of the base station, the second information regarding the capability of the device, including at least one of information on whether the device is used, throughput provided by the device, throughput available to the device, latency related to the device, and information regarding an encryption algorithm used in the device.

According to an embodiment, the controller 2030 may receive, from the CU-CP of the base station, a second message corresponding to the first message, and when the E1 interface setup fails, the first message or the second message is a setup failure message including cause information for the setup failure of the E1 interface, and the controller 2030 may transmit, to the CU-CP of the base station, the cause information for the setup failure message, including at least one of information indicating an overload of a control process of the device, information indicating insufficient processing resources of the CU-UP, information indicating that there is no encryption algorithm supported by the device, information indicating a hardware operation failure of the device, and information indicating an unknown cause of the setup failure.

According to an embodiment, the controller 2030 may, when there is a change in at least one of the first information and the second information, receive, from the CU-CP of the base station, a third message corresponding to the first message, and may transmit/receive such that if the first message is an update request message of the first information and the second information, the third message is an update response message of the first information and the second information, and if the third message is an update request message of the first information and the second information, the first message is an update response message of the first information and the second information.

According to an embodiment, the controller 2030 may transmit, to the CU-CP of the base station, such that the update information of the second information included in the first message includes at least one of information on whether the device is used, throughput provided by the device, throughput available to the device, latency related to the device, and information regarding an encryption algorithm used in the device.

According to an embodiment, the controller 2030 may, when there is a change in at least one of the first information and the second information, receive, from the CU-CP of the base station, a fourth message corresponding to the first message, wherein if the first message is an update request message of the first information and the second information, the fourth message is an update failure message of the first information and the second information, and if the fourth message is an update request message of the first information and the second information, the first message is an update failure message of the first information and the second information, and the controller 2030 may transmit, to the CU-CP of the base station, the cause information for the update failure message, including at least one of information indicating an overload of a control process of the device, information indicating insufficient processing resources of the CU-UP, information indicating that there is no encryption algorithm supported by the device, information indicating a hardware operation failure of the device, and information indicating an unknown cause of the update failure.

According to an embodiment, the controller 2030 may receive a request message for setting up a bearer context between the CU-CP of the base station and the CU-UP of the base station, wherein the first message is a response message to the request message, and the controller 2030 may transmit, to the CU-CP of the base station, such that the information included in the request message includes at least one of information on a policy of the device, information on a maximum bitrate aggregation of the device, security information of the device, and a maximum latency related to the device.

According to an embodiment, the controller 2030 may receive a request message for modifying a bearer context between the CU-CP of the base station and the CU-UP of the base station, wherein the first message is a response message to the request message, and the controller 2030 may transmit, to the CU-CP of the base station, such that the information included in the request message includes at least one of information on a policy of the device, information on a maximum bitrate aggregation of the device, security information of the device, and a maximum latency related to the device.

According to an embodiment, the controller 2030 may transmit including an update for security information within the request message, and may transmit, to the CU-CP of the base station, such that the update information for the security information includes at least one of handover between the CU-UP and the CU-CP of the base station, handover between the devices when there are multiple devices, information on expiration of the usage period of the security key of the device, and information on a decision made by the CU-CP of the base station.

According to an embodiment, the controller 2030 may, wherein the first message is a request message for modifying a bearer context, receive, from the CU-CP of the base station, a response message corresponding to the request message, and may transmit, to the CU-CP of the base station, such that the information included in the request message includes at least one of information indicating an overload of a control process of the device, information indicating insufficient processing resources of the CU-UP, information indicating that there is no encryption algorithm supported by the device, information indicating a hardware operation failure of the device, and information indicating an unknown cause of the setup failure.

The methods according to the embodiments described in the claims or the specification of the disclosure may be implemented in the form of hardware, software, or a combination of hardware and software. When implemented in software, a computer-readable storage medium storing one or more programs (software modules) may be provided. The one or more programs stored in the computer-readable storage medium are configured for execution by one or more processors within an electronic device. The one or more programs include instructions causing the electronic device to execute methods according to embodiments described in the claims or specification of the disclosure.

Such programs (software modules, software) may be stored in random access memory, non-volatile memory including flash memory, read only memory (ROM), electrically erasable programmable read only memory (EEPROM), a magnetic disc storage device, compact disc-ROM (CD-ROM), digital versatile discs (DVDs), or other forms of optical storage devices, or magnetic cassettes. Alternatively, they may be stored in memory composed of a combination of some or all thereof. Further, a plurality of such constituent memory may be included.

Further, the program may be stored in an attachable storage device that is accessible through a communication network such as the Internet, an intranet, a local area network (LAN), a wide LAN (WLAN), or a storage area network (SAN), or a communication network composed of a combination thereof. Such a storage device may connect to a device performing an embodiment of the disclosure through an external port. Further, a separate storage device on a communication network may connect to a device performing an embodiment of the disclosure.

In the specific embodiments of the disclosure described above, components included in the invention have been expressed in singular or plural form according to the specific embodiments presented. However, the singular or plural expressions are appropriately selected for the situation presented for convenience of description, and the disclosure is not limited to the singular or plural components, and even components expressed in plural form may be configured as a singular component, or even components expressed in singular form may be configured as plural components.

Meanwhile, although specific embodiments have been described in the detailed description of the disclosure, various modifications are possible without departing from the scope of the disclosure. Therefore, the scope of the disclosure should not be limited to the described embodiments, but should be defined by the claims described below as well as equivalents to these claims.

## Claims

1. A method performed by a central unit-user plane (CU-UP) of a base station in a wireless communication system, the method comprising:
identifying whether there exists a device that is connected to the CU-UP of the base station and is capable of assisting a computational function of the CU-UP of the base station; and
if the device connected to the CU-UP of the base station exists, transmitting, to a central unit-control plane (CU-CP) of the base station, a first message including first information indicating presence of the device and second information about capability of the device.

2. The method of claim 1, further comprising:
receiving, from the CU-CP of the base station, a second message corresponding to the first message,
wherein, if the first message is a request message for setting up an E1 interface for connecting the CU-UP of the base station and the CU-CP of the base station, the second message is a setup response message for the E1 interface, and
wherein, if the second message is a request message for setting up the E1 interface for connecting the CU-UP of the base station and the CU-CP of the base station, the first message is a setup response message for the E1 interface.

3. The method of claim 2, wherein the second information about the capability of the device includes at least one of information on whether the device is used, throughput provided by the device, throughput available to the device, latency related to the device, and information about an encryption algorithm used in the device.

4. The method of claim 1, further comprising:
receiving, from the CU-CP of the base station, a second message corresponding to the first message,
wherein if an E1 interface setup fails, the first message or the second message is a setup failure message including cause information for failure of the E1 interface setup, and
wherein the cause information for the setup failure message includes at least one of information indicating an overload of a control process of the device, information indicating insufficient processing resources of the CU-UP, information indicating that there is no encryption algorithm supported by the device, information indicating a hardware operation failure of the device, and information indicating an unknown cause of the setup failure.

5. The method of claim 1, further comprising:
in case that there is a change in at least one of the first information and the second information,
receiving, from the CU-CP of the base station, a third message corresponding to the first message,
wherein if the first message is an update request message of the first information and the second information, the third message is an update response message of the first information and the second information, and
wherein if the third message is an update request message of the first information and the second information, the first message is an update response message of the first information and the second information.

6. The method of claim 5, wherein update information of the second information included in the first message includes at least one of information on whether the device is used, throughput provided by the device, throughput available to the device, latency related to the device, and information about an encryption algorithm used in the device.

7. The method of claim 1, further comprising:
in case that there is a change in at least one of the first information and the second information,
receiving, from the CU-CP of the base station, a fourth message corresponding to the first message,
wherein if the first message is an update request message of the first information and the second information, the fourth message is an update failure message of the first information and the second information,
wherein if the fourth message is an update request message of the first information and the second information, the first message is an update failure message of the first information and the second information, and
wherein cause information for the update failure message includes at least one of information indicating an overload of a control process of the device, information indicating insufficient processing resources of the CU-UP, information indicating that there is no encryption algorithm supported by the device, information indicating a hardware operation failure of the device, and information indicating an unknown cause of the update failure.

8. The method of claim 1, further comprising:
receiving a request message for setting up a bearer context between the CU-CP of the base station and the CU-UP of the base station,
wherein the first message is a response message to the request message, and
wherein information included in the request message includes at least one of information on a policy of the device, information on a maximum bitrate aggregation of the device, security information of the device, and a maximum latency related to the device.

9. The method of claim 1, further comprising:
receiving a request message for modifying a bearer context between the CU-CP of the base station and the CU-UP of the base station,
wherein the first message is a response message to the request message, and
wherein information included in the request message includes at least one of information on a policy of the device, information on a maximum bitrate aggregation of the device, security information of the device, and a maximum latency related to the device.

10. The method of claim 9,
wherein an update for security information is further included in the request message, and
wherein the update information for the security information includes at least one of handover between the CU-UP and the CU-CP of the base station, handover between the devices when there are a plurality of devices, information on expiration of a usage period of a security key of the device, and information on a decision made by the CU-CP of the base station.

11. The method of claim 1,
wherein the first message is a request message for modifying a bearer context,
wherein the method further comprises receiving, from the CU-CP of the base station, a response message corresponding to the request message, and
wherein information included in the request message includes at least one of information indicating an overload of a control process of the device, information indicating insufficient processing resources of the CU-UP, information indicating that there is no encryption algorithm supported by the device, information indicating a hardware operation failure of the device, and information indicating an unknown cause of setup failure.

12. A method performed by a central unit-control plane (CU-CP) of a base station in a wireless communication system, the method comprising:
receiving, from a central unit-user plane (CU-UP) of the base station, a first message including first information indicating presence of a device that is connected to the CU-UP of the base station and is capable of assisting a computational function of the CU-UP of the base station and second information about capability of the device; and
identifying, based on the first message, the device connected to the CU-UP of the base station.

13. The method of claim 12, further comprising:
transmitting, to the CU-UP of the base station, a second message corresponding to the first message,
wherein, if the first message is a request message for setting up an E1 interface for connecting the CU-UP of the base station and the CU-CP of the base station, the second message is a setup response message for the E1 interface, and
wherein, if the second message is a request message for setting up the E1 interface for connecting the CU-UP of the base station and the CU-CP of the base station, the first message is a setup response message for the E1 interface.

14. A base station including a central unit-user plane (CU-UP) in a wireless communication system, the base station comprising:
a transceiver; and
at least one processor, wherein the at least one processor is configured to:
identify whether there exists a device that is connected to the CU-UP of the base station and is capable of assisting a computational function; and
if the device connected to the CU-UP of the base station exists, control to transmit, to a central unit-control plane (CU-CP) of the base station, a request message for setting up an E1 interface to deliver information indicating presence of the device and information about capability of the device.

15. A base station including a central unit-control plane (CU-CP) of a base station in a wireless communication system, the base station comprising:
a transceiver; and
at least one processor, wherein the at least one processor is configured to:
in order to identify information indicating presence of a device that is connected to a central unit-user plane (CU-UP) of the base station and is capable of assisting a computational function of the CU-UP of the base station and information about capability of the device,
control to transmit, to the CU-UP of the base station, a request message for setting up an E1 interface to connect the CU-UP of the base station and the CU-CP of the base station.
